(19) Europäisches Patentamt
European Patent Office
Office européen des brevets

(11) EP 3 174 223 B1

(12) **EUROPEAN PATENT SPECIFICATION**

(45) Date of publication and mention
of the grant of the patent:
**28.11.2018 Bulletin 2018/48**

(21) Application number: **14899709.1**

(22) Date of filing: **13.08.2014**

(51) Int Cl.:
*H04B 10/07* (2013.01)     *H04B 10/079* (2013.01)

(86) International application number:
**PCT/CN2014/084291**

(87) International publication number:
**WO 2016/023196 (18.02.2016 Gazette 2016/07)**

(54) **METHOD AND APPARATUS FOR DETERMINING OPTICAL SIGNAL-TO-NOISE RATIO**

VERFAHREN UND VORRICHTUNG ZUR BESTIMMUNG DES OPTISCHEN
SIGNAL-RAUSCH-VERHÄLTNISSES

PROCÉDÉ ET APPAREIL POUR DÉTERMINER UN RAPPORT SIGNAL/BRUIT OPTIQUE

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(43) Date of publication of application:
**31.05.2017 Bulletin 2017/22**

(73) Proprietor: **Huawei Technologies Co., Ltd.
Longgang District
Shenzhen, Guangdong 518129 (CN)**

(72) Inventors:
• **DONG, Zhenhua**
  Shenzhen
  Gunagdong 518129 (CN)
• **LAU, Alan**
  Hong Kong (CN)
• **LV, Chao**
  Shenzhen
  Guangdong 518129 (CN)
• **LU, Yanzhao**
  Shenzhen
  Guangdong 518129 (CN)

(74) Representative: **Gill Jennings & Every LLP
The Broadgate Tower
20 Primrose Street
London EC2A 2ES (GB)**

(56) References cited:
EP-A1- 2 475 113          CN-A- 1 720 680
CN-A- 1 731 707          CN-A- 101 119 174
CN-A- 102 687 426        CN-A- 102 946 275
CN-A- 102 946 275        US-A1- 2003 090 755
US-A1- 2012 106 951      US-A1- 2012 106 951
US-B1- 6 433 864

• Y. AOKI ET AL: "In-band OSNR Monitor Using An
Optical Bandpass Filter and Optical Power
Measurements for Superchannel Signals", 39TH
EUROPEAN CONFERENCE AND EXHIBITION ON
OPTICAL COMMUNICATION (ECOC 2013), 1
January 2013 (2013-01-01), pages 981-983,
XP055357864, DOI: 10.1049/cp.2013.1600 ISBN:
978-1-84919-759-5
• ODA, S. ET AL.: 'In-band OSNR Monitor Using an
Optical Bandpass Filter and Optical Power
Measurements for Superchannel Signals' 39 TH
EUROPEAN CONFERENCE AND EXHIBITION ON
OPTICAL COMMUNICATION (ECOC 2013 31
December 2013, XP055357864

**Description**

**TECHNICAL FIELD**

Embodiments of the present invention relate to the field of communications technologies, and in particular, to a method and an apparatus for determining an optical signal-to-noise ratio.

**BACKGROUND**

In the field of optical communications technologies, an optical signal-to-noise ratio (Optical Signal-to-Noise Ratio, OSNR for short) is a key parameter for measuring transmission performance of an optical communications system and is generally defined as a ratio of a signal power within a bandwidth of a channel to a noise power (Amplified Spontaneous Emission, ASE for short) within a 0.1 nm bandwidth at a center wavelength of the channel.

In the prior art, a method for determining an OSNR is to use an optical filter to obtain, by using ratio relationships existing between signal powers at frequencies and a signal power at a center frequency on a to-be-measured channel, signal and noise powers at different frequencies within a bandwidth of the channel and further calculate an OSNR.

However, a minimum filtering bandwidth of a current commercial optical filter is relatively wide. Therefore, using an optical filter to determine an OSNR of an optical signal results in poor accuracy.

"In-band OSNR Monitor Using an Optical Bandpass Filter and Optical Power Measurements for Superchannel Signals" by Oda et al. describes an in-band OSNR monitor using an optical bandpass filter and power measurements for superchannel signals and experimentally demonstrates OSNR monitoring of two-subcarrier DP-16QAM signal and higher tolerance to spectral narrowing.

**SUMMARY**

Embodiments of the present invention provide a method and an apparatus for determining an optical signal-to-noise ratio, to resolve a problem of poor accuracy of a prior-art method for determining an OSNR by using an optical filter.

A first aspect of the embodiments of the present invention provides a method for determining an optical signal-to-noise ratio, including:

obtaining a first optical signal on a to-be-measured channel;

converting the first optical signal to an electrical signal and extracting different frequency components of the electrical signal, where roll-off factors of the different frequency components of the electrical signal are the same as roll-off factors of corresponding frequency components of the first optical signal, and the roll-off factor is a ratio of a signal power of a non-center frequency component to a signal power of a center frequency component on the channel;

measuring powers of the different frequency components; and

determining an optical signal-to-noise ratio of the to-be-measured channel according to the powers and the roll-off factors of the different frequency components.

With reference to the first aspect, in a first possible implementation manner of the first aspect, the converting the first optical signal to an electrical signal and obtaining different frequency components of the electrical signal includes:

generating at least one local oscillation light beam used for coherent detection;

performing coherent coupling on the first optical signal and each local oscillation light beam to obtain second optical signals that are in a one-to-one correspondence with the local oscillation light beams;

performing photoelectric detection on the second optical signals to obtain the electrical signals that are in a one-to-one correspondence with the second optical signals; and

filtering the electrical signals to obtain the different frequency components.

With reference to the first possible implementation manner of the first aspect, in a second possible implementation manner of the first aspect, the second optical signal includes two signals, and

the performing photoelectric detection on the second optical signals to obtain the electrical signals that are in a one-to-one correspondence with the second optical signals includes:

performing balanced detection on the two second optical signals to obtain the electrical signals that are in a one-to-one correspondence with the second optical signals.

With reference to the second possible implementation manner of the first aspect, in a third possible implementation manner of the first aspect, when there are at least two local oscillation light beams and frequencies of the local oscillation light beams are different, frequency ranges of the electrical signals are different, and

the filtering the electrical signals to obtain the different frequency components includes:
filtering the electrical signals in a low-pass filtering manner to obtain the different frequency components, where one of the frequency components is corresponding to one of the electrical signals.

With reference to either the first or the second possible implementation manner of the first aspect, in a fourth possible implementation manner of the first aspect, when there are at least two local oscillation light beams and frequencies of the local oscillation light beams are different, frequency ranges of the electrical signals are different, and among the at least two local oscillation light beams, a frequency of one of the local oscillation light beams is corresponding to one target frequency component and the target frequency components are different; and
the filtering the electrical signals to obtain the different frequency components, where the frequency components are different, includes:
filtering the electrical signals in a band-pass filtering manner to obtain the target frequency components, where one of the frequency components is corresponding to one of the electrical signals.

With reference to either the first or the second possible implementation manner of the first aspect, in a fifth possible implementation manner of the first aspect, when there is one local oscillation light beam and the target frequency components are different, a frequency value range of the local oscillation light beam is corresponding to a minimum target frequency component or a maximum target frequency component among the target frequency components; and
the filtering the electrical signals to obtain the different frequency components includes:
performing multiple times of filtering on the electrical signals in a band-pass filtering manner to obtain the target frequency components, where filtering ranges used for the multiple times of filtering are different.

With reference to any one of the first aspect, or the first to the fifth possible implementation manners of the first aspect, in a sixth possible implementation manner of the first aspect, the determining an optical signal-to-noise ratio of the to-be-measured channel according to the powers and the roll-off factors of the different frequency components specifically includes:

determining a first ratio according to the powers and the roll-off factors of the different frequency components; and determining the optical signal-to-noise ratio of the to-be-measured channel according to the first ratio and a power calibration factor for a center frequency component of the first optical signal, where the power calibration factor for the center frequency component of the first optical signal is determined according to a bandwidth of the to-be-measured channel, a bandwidth of the different frequency components, and a bandwidth of noise.

With reference to the sixth possible implementation manner of the first aspect, in a seventh possible implementation manner of the first aspect, the different frequency components include at least a first frequency component and a second frequency component and the roll-off factors of the different frequency components include at least roll-off factors of a first frequency component and a second frequency component of the optical signal; and
the determining a first ratio according to the powers and the roll-off factors of the different frequency components specifically includes:

find $OSNR_C = \dfrac{P_{SIG-C}}{P_{ASE0}} = \dfrac{(P_1 - P_2)/(R_1 - R_2)}{\dfrac{P_1 + P_2 - (R_1 + R_2)(P_1 - P_2)/(R_1 - R_2)}{2}}$ according to $P_1 = R_1 \times P_{SIG-C} + P_{ASE0}$

and $P_2 = R_2 \times P_{SIG-C} + P_{ASE0}$, where
$OSNR_C$ is the first ratio; $P_1$ and $P_2$ are powers of a first frequency component and a second frequency component of the electrical signal, respectively; $R_1$ and $R_2$ are the roll-off factors of the first frequency component and the second frequency component of the first optical signal, respectively; $P_{SIG-C}$ is the signal power of the center frequency component of the electrical signal; and $P_{ASE0}$ is a noise power of the center frequency component of the electrical signal.

With reference to the sixth possible implementation manner of the first aspect, in an eighth possible implementation manner of the first aspect, it is determined that an optical fiber communication link on the to-be-measured channel includes an optical filter; the different frequency components include at least a first frequency component, a second frequency component, and a third frequency component, and the roll-off factors of the different frequency components include at least: roll-off factors of a first frequency component, a second frequency component, and a third frequency component of the first optical signal, and roll-off factors of the first frequency component, the second frequency component, and the third frequency component of the optical signal when the optical signal passes through the optical filter; and
the determining a first ratio according to the powers and the roll-off factors of the different frequency components specifically includes:

find $OSNR_C = \dfrac{P_{SIG-C}}{P_{ASE0}}$ according to $P_1 = R_1 \times \alpha^n \times P_{SIG-C} + P_{ASE0}$, $P_2 = R_2 \times \beta^n \times P_{SIG-C} + P_{ASE0}$, and $P_3 = R_3 \times \gamma^n \times P_{SIG-C} + P_{ASE0}$, where

$OSNR_C$ is the first ratio; $P_1$, $P_2$, and $P_3$ are powers of a first frequency component, a second frequency component, and a third frequency component of the electrical signal, respectively; $R_1$, $R_2$, and $R_3$ are the roll-off factors of the first frequency component, the second frequency component, and the third frequency component of the first optical signal, respectively; $P_{SIG-C}$ is the signal power of the center frequency component of the electrical signal; $P_{ASE0}$ is a noise power of the center frequency component of the electrical signal; n is a quantity of optical filters; and $\alpha$, $\beta$, and $\gamma$ are, respectively, the roll-off factors of the first frequency component, the second frequency component, and the third frequency component of the optical signal when the optical signal passes through the optical filter.

With reference to any one of the sixth to the eighth possible implementation manners of the first aspect, in a ninth possible implementation manner of the first aspect, the determining the optical signal-to-noise ratio of the to-be-measured channel according to the first ratio and a power calibration factor for a center frequency component of the first optical signal specifically includes:

determining the optical signal-to-noise ratio according to $OSNR = \lambda \times OSNR_C$, where
$OSNR$ is the optical signal-to-noise ratio of the to-be-measured channel; $OSNR_C$ is the first ratio; and $\lambda$ is the calibration factor.

A second aspect of the embodiments of the present invention provides an apparatus for determining an optical signal-to-noise ratio, including:

an optical splitter, configured to obtain a first optical signal on a to-be-measured channel;
an optical-to-electrical converter and extractor, configured to convert the first optical signal to an electrical signal and extract different frequency components of the electrical signal, where roll-off factors of the different frequency components of the electrical signal are the same as roll-off factors of corresponding frequency components of the first optical signal, and the roll-off factor is a ratio of a signal power of a non-center frequency component to a signal power of a center frequency component on the channel;
a measurer, configured to measure powers of the different frequency components; and
a calculator, configured to determine an optical signal-to-noise ratio of the to-be-measured channel according to the powers and the roll-off factors of the different frequency components.

With reference to the second aspect, in a first possible implementation manner of the second aspect, in the converting the first optical signal to an electrical signal, the optical-to-electrical converter and extractor includes:

a laser, configured to generate at least one local oscillation light beam used for coherent detection;
an optical coupler, configured to perform coherent coupling on the first optical signal and each local oscillation light beam to obtain second optical signals that are in a one-to-one correspondence with the local oscillation light beams;
a photoelectric detector, configured to perform photoelectric detection on the second optical signals to obtain the electrical signals that are in a one-to-one correspondence with the second optical signals; and
an electrical filter, configured to filter the electrical signals to obtain the different frequency components of the electrical signal.

With reference to the first possible implementation manner of the second aspect, in a second possible implementation manner of the second aspect, the second optical signal outputted by the optical coupler is two signals, and the photoelectric detector is a balance detector that performs balanced detection on the two second optical signal to obtain the electrical signals that are in a one-to-one correspondence with the second optical signals.

With reference to the second possible implementation manner of the second aspect, in a third possible implementation manner of the second aspect, the optical-to-electrical converter and extractor further includes a first controller, configured to send an instruction to the laser, where the instruction is used to instruct that the laser generates at least two local oscillation light beams and that frequencies of the local oscillation light beams are different, so that frequency ranges of the electrical signals obtained by the photoelectric detector are different;
the laser is a tunable laser configured to generate local oscillation light beams of different frequencies according to the instruction of the first controller; and
the electrical filter is a low-pass filter configured to filter the electrical signals in a low-pass filtering manner to obtain the different frequency components, where one frequency component is corresponding to one electrical signal.

With reference to either the first or the second possible implementation manner of the second aspect, in a fourth possible implementation manner of the second aspect, the optical-to-electrical converter and extractor further includes a first controller, configured to send an instruction to the laser, where the instruction is used to instruct that the laser generates at least two local oscillation light beams and that frequencies of the local oscillation light beams are different, so that frequency ranges of the electrical signals obtained by the photoelectric detector are different, where among the at least two local oscillation light beams, a frequency of one of the local oscillation light beams is corresponding to one target frequency component and the target frequency components are different;

the laser is a tunable laser configured to generate local oscillation light beams of different frequencies according to the instruction of the first controller; and

the electrical filter is a band-pass filter configured to filter the electrical signals in a band-pass filtering manner to obtain the target frequency components, where one frequency component is corresponding to one electrical signal.

With reference to either the first or the second possible implementation manner of the second aspect, in a fifth possible implementation manner of the second aspect, if the laser generates one local oscillation light beam and the target frequency components are different, a frequency value range of the local oscillation light beam is corresponding to a minimum target frequency component or a maximum target frequency component among the target frequency components;

the optical-to-electrical converter and extractor includes a second controller, configured to send a band-pass filtering setting instruction to the electrical filter, where the instruction is used to instruct the electrical filter to perform multiple times of filtering on the electrical signals, so that the electrical filter obtains the target frequency components; and

the electrical filter is a tunable band-pass filter configured to adjust a band-pass filtering setting according to the instruction of the second controller and perform multiple times of filtering on the electrical signals to obtain the target frequency components, where filtering ranges used for the multiple times of filtering are different.

With reference to any one of the second aspect, or the first to the fifth possible implementation manners of the second aspect, in a sixth possible implementation manner of the second aspect, the calculator includes:

a first ratio calculator, configured to determine a first ratio according to the powers and the roll-off factors of the different frequency components; and

a calibrator, configured to determine the optical signal-to-noise ratio of the to-be-measured channel according to the first ratio and a power calibration factor for a center frequency component of the first optical signal, where the power calibration factor for the center frequency component of the first optical signal is determined according to a bandwidth of the to-be-measured channel, a bandwidth of the different frequency components, and a bandwidth of noise.

With reference to the sixth possible implementation manner of the second aspect, in a seventh possible implementation manner of the second aspect, the different frequency components include at least a first frequency component and a second frequency component, and

the first ratio calculator is specifically configured to obtain roll-off factors of a first frequency component and a second frequency component of the optical signal, and

find $OSNR_C = \dfrac{P_{SIG-C}}{P_{ASE0}} = \dfrac{(P_1 - P_2)/(R_1 - R_2)}{\dfrac{P_1 + P_2 - (R_1 + R_2)(P_1 - P_2)/(R_1 - R_2)}{2}}$ according to $P_1 = R_1 \times P_{SIG-C} + P_{ASE0}$

and $P_2 = R_2 \times P_{SIG-C} + P_{ASE0}$, where

$OSNR_C$ is the first ratio; $P_1$ and $P_2$ are powers of a first frequency component and a second frequency component of the electrical signal, respectively; $R_1$ and $R_2$ are the roll-off factors of the first frequency component and the second frequency component of the first optical signal, respectively; $P_{SIG-C}$ is the signal power of the center frequency component of the electrical signal; and $P_{ASE0}$ is a noise power of the center frequency component of the electrical signal.

With reference to the sixth possible implementation manner of the second aspect, in an eighth possible implementation manner of the second aspect, the apparatus further includes:

an optical filter determiner, configured to: if it is determined that an optical fiber communication link on the to-be-measured channel includes an optical filter, indicate that the different frequency components obtained by the optical-to-electrical converter and extractor include at least a first frequency component, a second frequency component, and a third frequency component; and

the first ratio calculator is specifically configured to:

obtain roll-off factors of a first frequency component, a second frequency component, and a third frequency component of the optical signal, and roll-off factors of the first frequency component, the second frequency component, and the third frequency component of the optical signal when the optical signal passes through the optical filter; and

find $OSNR_C = \dfrac{P_{SIG-C}}{P_{ASE0}}$ according to $P_1 = R_1 \times \alpha^n \times P_{SIG-C} + P_{ASE0}$, $P_2 = R_2 \times \beta^n \times P_{SIG-C} + P_{ASE0}$, and

$P_3 = R_3 \times \gamma^n \times P_{SIG-C} + P_{ASE0}$, where

$OSNR_C$ is the first ratio; $P_1$, $P_2$, and $P_3$ are powers of a first frequency component, a second frequency component, and a third frequency component of the electrical signal, respectively; $R_1$, $R_2$, and $R_3$ are the roll-off factors of the first frequency component, the second frequency component, and the third frequency component of the first optical signal, respectively; $P_{SIG-C}$ is the signal power of the center frequency component of the electrical signal; $P_{ASE0}$ is a noise power of the center frequency component of the electrical signal; n is a quantity of optical filters; and $\alpha$, $\beta$, and $\gamma$ are, respectively, the roll-off factors of the first frequency component, the second frequency component, and the third frequency component of the optical signal when the optical signal passes through the optical filter.

With reference to any one of the sixth to the eighth possible implementation manners of the second aspect, in a ninth possible implementation manner of the second aspect, the calibrator is specifically configured to:

determine the optical signal-to-noise ratio according to $OSNR = \lambda \times OSNR_C$, where
$OSNR$ is the optical signal-to-noise ratio of the to-be-measured channel; $OSNR_C$ is the first ratio; and $\lambda$ is the calibration factor.

In the embodiments of the present invention, a first optical signal on a to-be-measured channel is obtained; the first optical signal is converted to an electrical signal, where in a conversion process, roll-off factors of corresponding frequency components are kept unchanged; different frequency components are extracted and powers of the different frequency components of the electrical signal are measured; and then, an optical signal-to-noise ratio of the to-be-measured channel is determined according to the powers of the different frequency components. A measurement error may exist in a process of measuring the powers of the different frequency components, and a smaller roll-off factor indicates less impact of the measurement error on OSNR calculation. A roll-off factor at one frequency is related to a bandwidth of a filter used, and a narrower bandwidth of the filter indicates a smaller roll-off factor obtained. A bandwidth of an electrical filter used for measurement on an electrical signal converted from an optical signal is far less than a bandwidth of an optical filter used for direct measurement on the optical signal. Therefore, at a same frequency, a roll-off factor measured in an optical-to-electrical conversion manner is less than a roll-off factor obtained by directly measuring the optical signal, and a smaller roll-off factor makes the calculated OSNR more accurate. In addition, a bandwidth selectable for the electrical filter used for measuring the different frequency components of the electrical signal is far less than a bandwidth selectable for the optical filter, and accuracy of the measured powers and roll-off factors of the different frequency components of the electrical signal is higher than accuracy of powers and roll-off factors measured when the optical filter is used. Therefore, accuracy of the optical signal-to-noise ratio of the to-be-measured channel determined according to the method for determining an optical signal-to-noise ratio provided by the embodiments of the present invention is significantly improved.

## BRIEF DESCRIPTION OF DRAWINGS

To describe the technical solutions in the embodiments of the present invention or in the prior art more clearly, the following briefly describes the accompanying drawings required for describing the embodiments or the prior art. Apparently, the accompanying drawings in the following description show some embodiments of the present invention, and a person of ordinary skill in the art may still derive other drawings from these accompanying drawings without creative efforts.

FIG. 1A is a schematic diagram of spectral shapes of a signal portion and a noise portion of an optical signal;
FIG. 1B is a schematic diagram of a signal power and a noise power that are used for determining an optical signal-to-noise ratio of a to-be-measured channel;
FIG. 1C is a schematic diagram of a signal power of a center frequency component and a signal power of a non-center frequency component;
FIG. 2A is a flowchart of Embodiment 1 of a method for determining an optical signal-to-noise ratio provided by the embodiments of the present invention;

FIG. 2B is a schematic diagram of signal and noise powers of different frequency components;

FIG. 2C is a schematic diagram of determining signal and noise powers of a center frequency component according to different frequency components;

FIG. 2D is a schematic diagram of a signal power relationship between a center frequency component and a non-center frequency component;

FIG. 3A is a schematic diagram of a first possible frequency spectral shape of an electrical signal obtained in S202;

FIG. 3B is a schematic diagram of a second possible frequency spectral shape of the electrical signal obtained in S202;

FIG. 3C is a schematic diagram of a third possible frequency spectral shape of the electrical signal obtained in S202;

FIG. 3D is a schematic diagram of a fourth possible frequency spectral shape of the electrical signal obtained in S202;

FIG. 4A is a schematic diagram of frequency components obtained in a low-pass filtering manner in S202;

FIG. 4B is a schematic diagram of partial enlargement of FIG. 4A;

FIG. 4C is a schematic diagram of an edge frequency component obtained in a low-pass filtering manner in S202;

FIG. 4D is a schematic diagram of an edge frequency component obtained in a low-pass filtering manner in S202;

FIG. 5A is a schematic diagram of frequency components obtained in a band-pass filtering manner in S202;

FIG. 5B is another schematic diagram of the different frequency components obtained in a band-pass filtering manner in S202;

FIG. 6 is a schematic flowchart of Embodiment 2 of the method for determining an optical signal-to-noise ratio provided by the embodiments of the present invention;

FIG. 7A is a schematic flowchart of Embodiment 3 of the method for determining an optical signal-to-noise ratio provided by the embodiments of the present invention;

FIG. 7B is a schematic diagram of a change of an original signal optical spectrum when an optical transmission link includes an optical filter;

FIG. 7C is a schematic diagram of a change of an original signal optical spectrum when an optical transmission link includes at least one optical filter;

FIG. 7D is a schematic diagram of a signal and noise power relationship between a center frequency component and a non-center frequency component when an optical transmission link includes an optical filter;

FIG. 8A is a structural diagram of Embodiment 1 of an apparatus for determining an optical signal-to-noise ratio provided by the embodiments of the present invention;

FIG. 8B is an optional schematic structural diagram of a measurer;

FIG. 8C is another optional schematic structural diagram of a measurer;

FIG. 9 is a structural diagram of Embodiment 2 of the apparatus for determining an optical signal-to-noise ratio provided by the embodiments of the present invention;

FIG. 10A is a structural diagram of Embodiment 3 of the apparatus for determining an optical signal-to-noise ratio provided by the embodiments of the present invention;

FIG. 10B is a structural diagram of Embodiment 4 of the apparatus for determining an optical signal-to-noise ratio provided by the embodiments of the present invention;

FIG. 10C is a structural diagram of Embodiment 5 of the apparatus for determining an optical signal-to-noise ratio provided by the embodiments of the present invention;

FIG. 11 is a structural diagram of Embodiment 6 of the apparatus for determining an optical signal-to-noise ratio provided by the embodiments of the present invention; and

FIG. 12 is a structural diagram of Embodiment 7 of the apparatus for determining an optical signal-to-noise ratio provided by the embodiments of the present invention.

## DESCRIPTION OF EMBODIMENTS

To make the objectives, technical solutions, and advantages of the embodiments of the present invention clearer, the following clearly and completely describes the technical solutions in the embodiments of the present invention with reference to the accompanying drawings in the embodiments of the present invention. Apparently, the described embodiments are some but not all of the embodiments of the present invention. All other embodiments obtained by a person of ordinary skill in the art based on the embodiments of the present invention without creative efforts shall fall within the protection scope of the present invention.

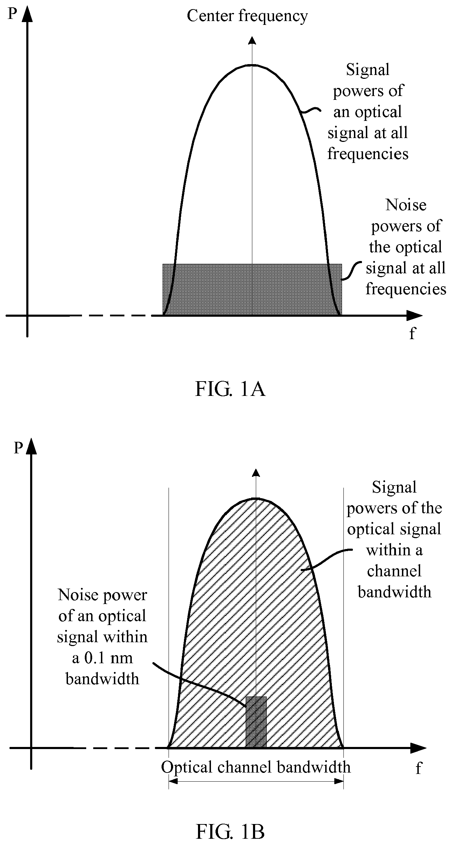

In an optical transmission link of an optical fiber communications system, an optical signal on a channel has a given spectral bandwidth and generally, noise is also evenly distributed on the spectral bandwidth. Therefore, a power measured at any frequency within the spectral bandwidth of the optical signal includes a signal power at the frequency and a noise power at the frequency. Referring to FIG. 1A, FIG. 1A is a schematic diagram of spectral shapes of a signal portion and a noise portion of an optical signal.

An optical signal-to-noise ratio is an important indicator for measuring channel transmission performance. The optical signal-to-noise ratio is defined as a ratio of a signal power on a to-be-measured channel to a noise power within a 0.1 nm bandwidth at a center wavelength of the to-be-measured channel. Referring to FIG. 1B, FIG. 1B is a schematic diagram of a signal power and a noise power that are used for determining an optical signal-to-noise ratio of a to-be-measured channel.

In the embodiments of the present invention, an optical signal on a to-be-measured channel is converted to an electrical signal, and the electrical signal is made to carry power information corresponding to the optical signal. Powers at different frequencies are measured. A ratio of a signal power of a center frequency component to a noise power of the center frequency component of the electrical signal may be determined, based on a fact that noise on a to-be-measured channel generally presents a white Gaussian noise characteristic, which means a power of a noise signal remains basically the same at all frequencies on the to-be-measured channel, and that there is a correspondence between signal powers at the frequencies on the channel and roll-off factors at the frequencies of the optical signal. Then, an optical signal-to-noise ratio of the to-be-measured channel may be determined by using a relationship between the signal power of the center frequency component and a signal power on an entire bandwidth of the to-be-measured channel, and a relationship between the noise power of the center frequency component and a noise power within a 0.1 nm bandwidth.

A roll-off factor at a frequency refers to a ratio of a signal power at the frequency component to a signal power of a center frequency component on the channel. The roll-off factor may be measured in advance.

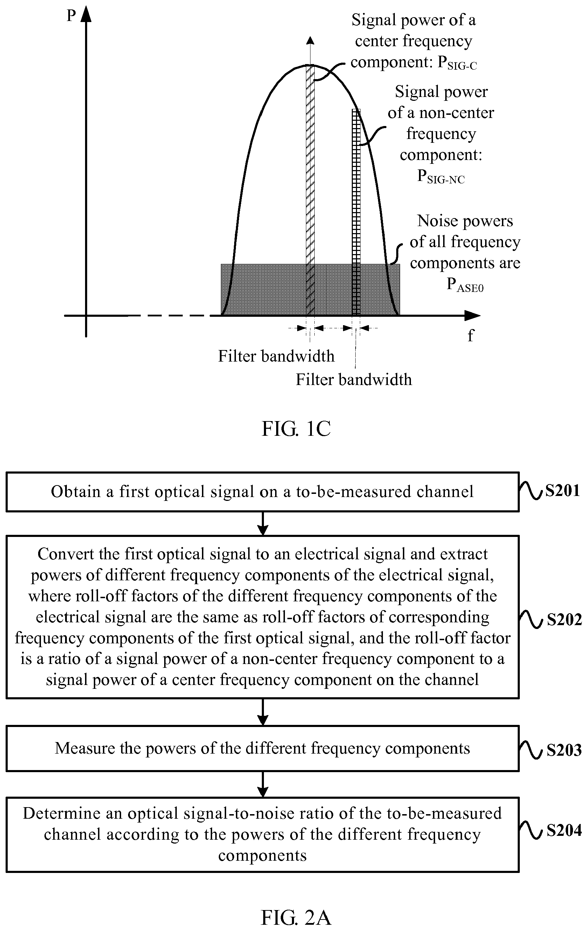

It should be noted that when powers of a signal at frequencies are being measured, the power measurement is impossible at only one frequency point, and therefore, a power at a frequency needs to be measured on a given bandwidth. That is, a power of a frequency component needs to be measured. A frequency component of any signal at a frequency described in the embodiments of the present invention refers to a segment of signal of a preset bandwidth that is extracted from the signal by using the frequency as a center frequency. The preset bandwidth may be, for example, 500 MHz or 1000 MHz. Referring to FIG. 1C, FIG. 1C is a schematic diagram of a signal power of a center frequency component and a signal power of a non-center frequency component.

FIG. 2A is a flowchart of Embodiment 1 of a method for determining an optical signal-to-noise ratio provided by the embodiments of the present invention. In this embodiment of the present invention, an optical fiber communication link in an optical communications system may be used as a to-be-measured channel. As shown in FIG. 2A, the method includes the following steps.

S201. Obtain a first optical signal on the to-be-measured channel.

A part of optical signal may be split from the to-be-measured channel by installing an optical splitter on the optical fiber communication link. The part of optical signal may be referred to as the first optical signal.

Optionally, a higher proportion of the split first optical signal in a total optical signal on the to-be-measured channel indicates greater impact on original optical communication transmission over the to-be-measured channel, and a lower proportion indicates lower accuracy of a determined optical signal-to-noise ratio. Therefore, the first optical signal may be selected to be 1%-5% of a total optical signal power of the to-be-measured channel, so as to achieve a balance between accuracy of a result of determining the optical signal-to-noise ratio and stability of the original optical communication transmission over the to-be-measured channel.

S202. Convert the first optical signal to an electrical signal and extract different frequency components of the electrical signal, where roll-off factors of the different frequency components of the electrical signal are the same as roll-off factors of corresponding frequency components of the first optical signal, and the roll-off factor is a ratio of a signal power of a non-center frequency component to a signal power of a center frequency component on the channel.

For example, the first optical signal may be converted to the electrical signal by using a coherent detection principle. Optionally, the converting the first optical signal to an electrical signal may include the following steps:

generating at least one local oscillation light beam used for coherent detection;
performing coherent coupling on the first optical signal and each local oscillation light beam to obtain second optical signals that are in a one-to-one correspondence with the local oscillation light beams;
performing photoelectric detection on the second optical signals to obtain the electrical signals that are in a one-to-one correspondence with the second optical signals; and
filtering the electrical signals to obtain the different frequency components.

The local oscillation light beam used for coherent detection may be a laser beam. The coherent coupling may be implemented by using an optical coupler, for example, a 3 dB optical coupler. This type of optical coupler has two inlets and two outlets. Inputting each local oscillation light beam of the at least one local oscillation light beam and the first optical signal into the two inlets of the optical coupler can obtain one second optical signal corresponding to the local oscillation light beam. The second optical signals are outputted from the two outlets of the optical coupler.

The photoelectric detection may be implemented by using a photoelectric detector, for example, a photoelectric detector with one photodiode. Inputting either of the second optical signals outputted from the two outlets of the optical coupler into the photoelectric detector can obtain one electrical signal corresponding to the local oscillation light beam. Optionally, the photoelectric detection may alternatively be implemented by using a photoelectric detector with two photodiodes, that is, a balance detector. Inputting the two second optical signals outputted from the two outlets of the optical coupler into the balance detector can obtain one electrical signal corresponding to the local oscillation light beam. A power of an alternating current electrical signal that is obtained by means of photoelectric detection by using a balance detector is twice as high as a power of an alternating current electrical signal that is obtained by using a photoelectric detector with a single photodiode. Therefore, using a balance detector can improve accuracy of a determined optical signal-to-noise ratio.

The filtering the electrical signals to obtain the different frequency components may be implemented by using an electrical filter, a low-pass filter, a band-pass filter, or a high-pass filter. A manner in which a high-pass filter is used is the same as a manner in which a band-pass filter is used. Details are not further described herein.

Optionally, when a low-pass filter is used to filter the electrical signals to obtain the different frequency components, the photoelectric detection needs to be implemented by using a balance detector, so that an obtained electrical signal does not include a direct current component of the first optical signal. Optionally, when a band-pass filter is used to filter the electrical signals to obtain the different frequency components, the photoelectric detection may be implemented by using a photoelectric detector with a single photodiode or a balance detector, and the band-pass filter can filter out a direct current component of the electrical signal that is converted from the first optical signal.

S203. Measure powers of the different frequency components.

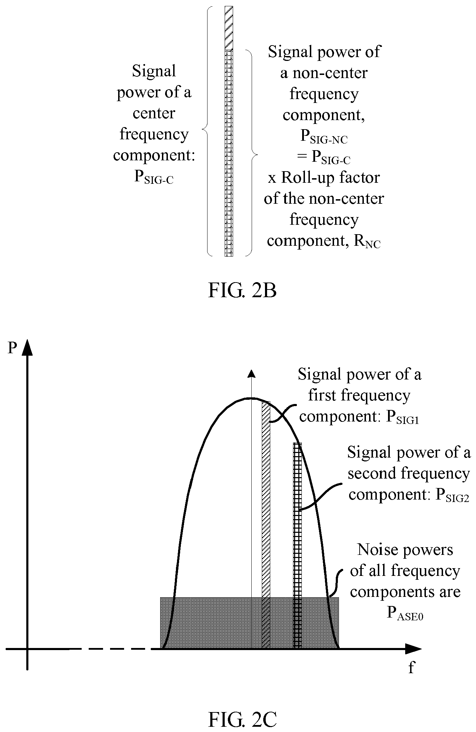

The measuring powers of the different frequency components may be implemented by using an electric power meter or another electrical signal power measurement device. For example, an analog to digital converter (Analog to Digital Converter, ADC for short) is used to convert an analog quantity to a digital quantity and then an average power value corresponding to the digital quantity is calculated by means of sampling. This is not limited in the present invention. FIG. 2B is a schematic diagram of signal and noise powers of different frequency components.

S204. Determine an optical signal-to-noise ratio of the to-be-measured channel according to the powers of the different frequency components.

Referring to FIG. 2C, FIG. 2C is a schematic diagram of determining signal and noise powers of a center frequency component according to different frequency components.

A power measured at any frequency within a bandwidth of an electrical signal on a to-be-measured channel includes a signal power at the frequency and a noise power at the frequency, and a noise power at any frequency within the bandwidth of the to-be-measured channel remains basically the same. That is:

$$\text{A power measured at any frequency} = \text{A signal power of the center frequency component} \times \text{A roll-off factor at the frequency} + \text{A noise power of the center frequency component}$$

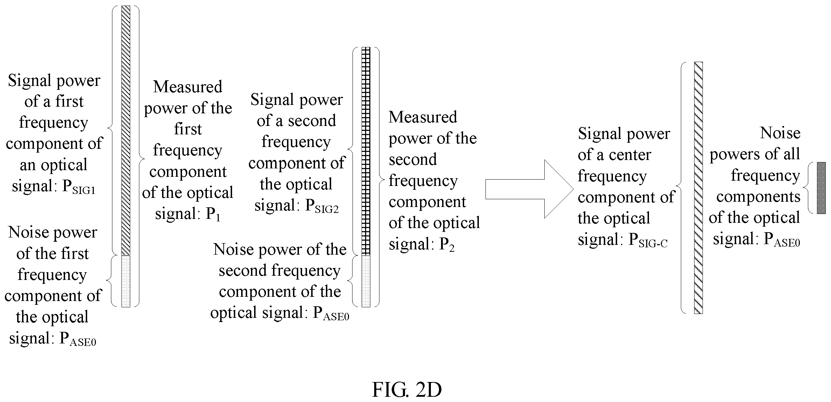

It can be learned from the definition of the roll-off factor that a roll-off factor of a center frequency component is 1 and a roll-off factor of a non-center frequency component is equal to a ratio of a power of the non-center frequency component to a power of a center frequency. FIG. 2D is a schematic diagram of a signal power relationship between a center frequency component and a non-center frequency component.

Therefore, a ratio of the signal power of the center frequency component to the noise power of the center frequency component, denoted as a first ratio, may be calculated according to powers and roll-off factors of at least two different frequency components. Then, the optical signal-to-noise ratio of the to-be-measured channel may be determined according to the first ratio and a power calibration factor for the center frequency component of the first optical signal.

The calibration factor is used to convert the ratio of the signal power of the center frequency component to the noise power of the center frequency component to a ratio of a signal power within a bandwidth of the to-be-measured channel to a noise power within a 0.1 nm bandwidth. Referring to FIG. 1B, the power calibration factor for the center frequency component of the first optical signal is determined according to the bandwidth of the to-be-measured channel, a bandwidth of the different frequency components, and a bandwidth of noise. The bandwidth of the to-be-measured channel may be greater than, less than, or equal to a bandwidth of the first optical signal. A reference noise bandwidth is generally the 0.1 nm bandwidth in the definition of the OSNR. A filtering bandwidth is the bandwidth of the different frequency components and may be determined according to an actual signal on the to-be-measured channel on an actual optical fiber communication link. The calibration factor may be obtained by first using a back-to-back method, for example, connecting a transmit end of an optical transmission link directly to a measurement device and measuring a power of the center frequency component of the first optical signal and a power of the first optical signal within the bandwidth of the channel, and then calculating the calibration factor according to a relationship between a noise bandwidth of a frequency component and the 0.1 nm bandwidth.

Preferably, one of the different frequencies may be selected as close as possible to or equal to the center frequency of the electrical signal. Further, another frequency of the different frequencies may be selected as close as possible to an edge frequency of the electrical signal. In this case, the determined optical signal-to-noise ratio of the to-be-measured channel can be more accurate.

Optionally, roll-off factors of the different frequency components may be measured in advance. The roll-off factor is related to a rate, a modulation format, and a pulse shape of an optical signal on the to-be-measured channel. Back-to-back measurement may be used. That is, a transmit end of an optical fiber communications device is directly connected to a measurement device without any transmission device in the way, so as to measure powers of electrical signals corresponding to the center frequency component and the different frequency components of the first optical signal, and ratios of powers of these non-center frequency components to the power of the center frequency component are recorded as the roll-off factors of the different frequencies respectively.

In this embodiment of the present invention, a first optical signal on a to-be-measured channel is obtained; the first optical signal is converted to an electrical signal, where in a conversion process, roll-off factors of corresponding frequency components are kept unchanged; different frequency components are extracted and powers of the different frequency components of the electrical signal are measured; and then, an optical signal-to-noise ratio of the to-be-measured channel is determined according to the powers of the different frequency components. In a process of measuring the powers of the different frequency components, a measurement error may exist, and a smaller roll-off factor indicates less impact of the measurement error on OSNR calculation. A roll-off factor at one frequency is related to a bandwidth of a filter used, and a narrower bandwidth of the filter indicates a smaller roll-off factor obtained. A bandwidth of an electrical filter used for measurement on an electrical signal converted from an optical signal is far less than a bandwidth of an optical filter used for direct measurement on the optical signal. Therefore, at a same frequency, a roll-off factor measured in an optical-to-electrical conversion manner is less than a roll-off factor obtained by directly measuring the optical signal, and a smaller roll-off factor makes the calculated OSNR more accurate. In addition, a bandwidth selectable for the electrical filter used for measuring the different frequency components of the electrical signal is far less than a bandwidth selectable for the optical filter, and accuracy of the measured powers and roll-off factors of the different frequency components of the electrical signal is higher than accuracy of powers and roll-off factors measured when the optical filter is used. Therefore, accuracy of the optical signal-to-noise ratio of the to-be-measured channel determined according to the method for determining an optical signal-to-noise ratio provided in this embodiment of the present invention is significantly improved. Further, a low-cost optical coupler and a low-cost photoelectric detector are used to convert an optical signal to the electrical signal, so that the powers of the different frequency components can be obtained by using a low-cost electrical filter and a low-cost electric power measurement device instead of an expensive optical filter device, to determine the optical signal-to-noise ratio. Therefore, this embodiment of the present invention provides a method for determining an optical signal-to-noise ratio that is highly accurate and cost-effective.

It should be noted that in S202, at least one electrical signal may be obtained according to the at least one local oscillation light beam. A frequency range of each electrical signal is corresponding to a frequency of a corresponding local oscillation light beam used for coherent detection. A frequency spectral shape of a corresponding electrical signal that is obtained according to the at least one local oscillation light beam of different frequencies has many possibilities.

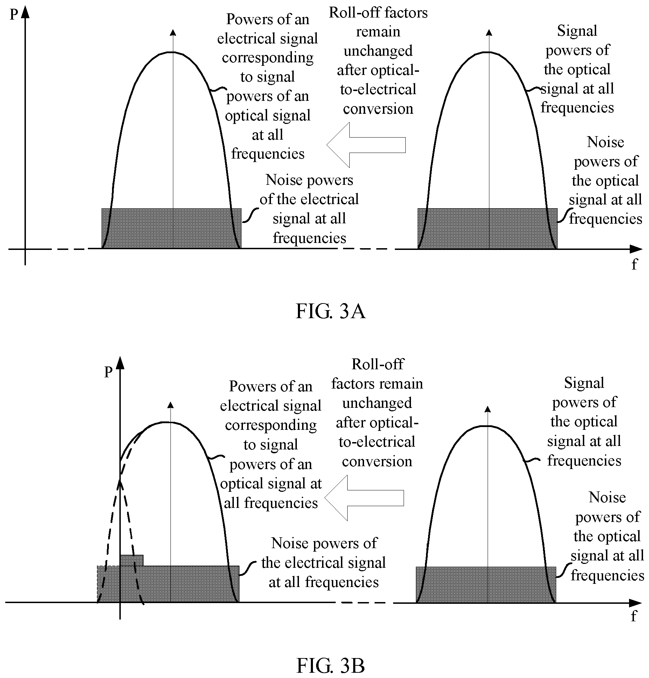

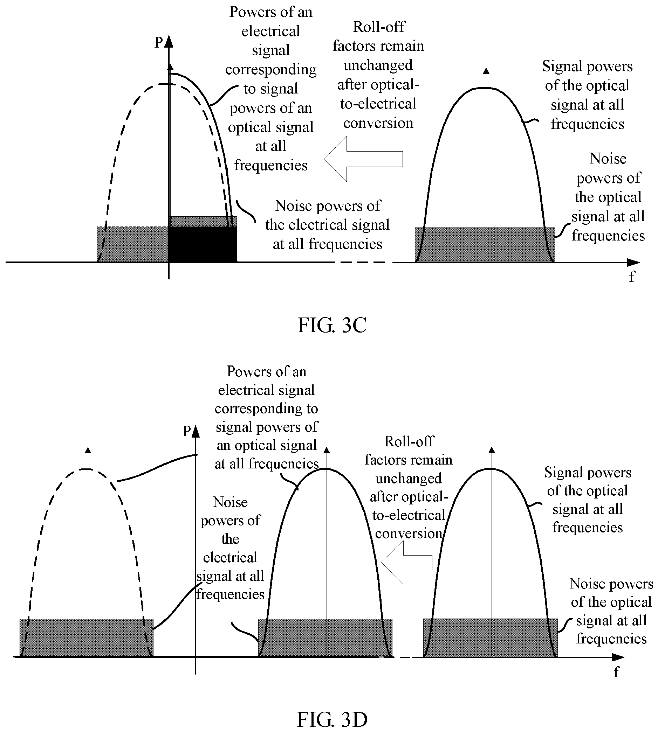

FIG. 3A is a schematic diagram of a first possible frequency spectral shape of an electrical signal obtained in S202. FIG. 3B is a schematic diagram of a second possible frequency spectral shape of the electrical signal obtained in S202. FIG. 3C is a schematic diagram of a third possible frequency spectral shape of the electrical signal obtained in S202. FIG. 3D is a schematic diagram of a fourth possible frequency spectral shape of the electrical signal obtained in S202, where vertical coordinates P represent powers, measured in decibels relative to one milliwatt.

Referring to FIG. 3A, when a frequency of the local oscillation light beam is lower than a center frequency of the first optical signal minus half a bandwidth of the first optical signal, the frequency spectral shape of the electrical signal is shown in FIG. 3A. A center frequency of the electrical signal is equal to the center frequency of the first optical signal minus the frequency of the local oscillation light beam. This is equivalent that a spectrum of the first optical signal is translated in the zero frequency direction by a distance of the frequency of the local oscillation light beam, and the frequency spectral shape of the outputted electrical signal is approximately the same as a spectral shape of the first optical signal.

However, when the frequency of the local oscillation light beam is higher than the center frequency of the first optical signal minus half the bandwidth of the first optical signal and is less than the center frequency of the first optical signal, the frequency spectral shape of the electrical signal is shown in FIG. 3B. This is because, in a frequency spectrum of the electrical signal obtained by using a coherent detection method, a value resulting from deducting the frequency of the local oscillation light beam from a portion of the first optical signal with frequencies lower than the frequency of the local oscillation light beam is negative, and according to a coherent detection principle, a power of this portion is mirrored and superimposed on a portion of the first optical signal with frequencies higher than the frequency of local oscillation light beam. This is equivalent that a spectral shape of the first optical signal is translated in the zero frequency direction by a distance of the frequency of the local oscillation light beam, and then the portion of the first optical signal with frequencies lower than the frequency of the local oscillation light beam is mirrored and superimposed on the portion of the first optical signal with frequencies higher than the frequency of the local oscillation light beam.

Similarly, it can be learned that when the frequency of the local oscillation light beam is equal to the center frequency of the first optical signal, the frequency spectral shape of the electrical signal is shown in FIG. 3C. When the frequency of the local oscillation light beam is higher than the center frequency of the first optical signal plus half the bandwidth of the first optical signal, the frequency spectral shape of the electrical signal is shown in FIG. 3D. Similarly, a case can be learned in which the frequency of the local oscillation light beam is higher than the center frequency of the first optical signal and is lower than the center frequency of the first optical signal plus half the bandwidth of the first optical signal.

Therefore, to ensure that the roll-off factors of the extracted different frequency components are the same as the roll-off factors of the corresponding frequency components of the first optical signal, selectable filtering frequency settings and frequency ranges of the local oscillation light beam are also different for different filtering manners.

The following specifically describes determining of the specific filtering frequency setting and the frequency range of the local oscillation light beam when different filtering manners are used in S202.

The filtering the electrical signals to obtain the different frequency components may be implemented in a low-pass filtering manner, a band-pass filtering manner, or the like.

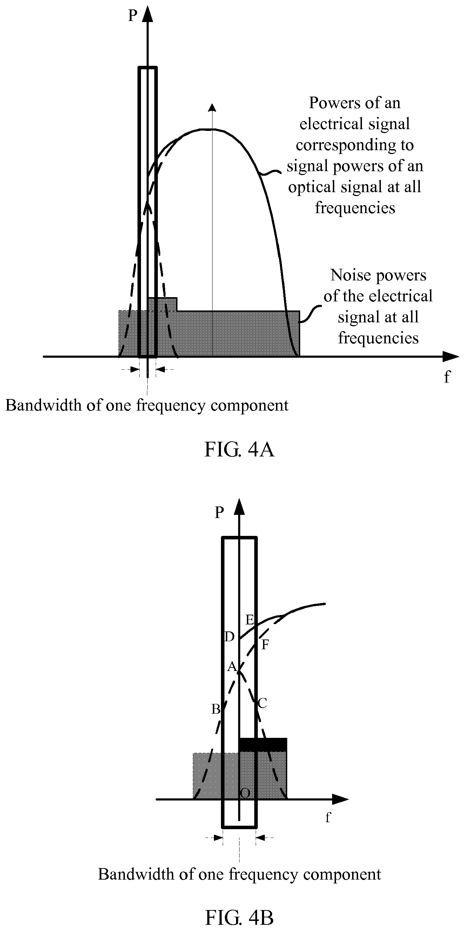

FIG. 4A is a schematic diagram of frequency components obtained in a low-pass filtering manner in S202. FIG. 4B is a schematic diagram of partial enlargement of FIG. 4A.

The low-pass filtering manner is generally implemented by using a low-pass filter. A filtering condition for the low-pass filter may be set as follows: A preset frequency is specified, so that an electrical signal lower than the preset frequency can pass and an electrical signal higher than the preset frequency is removed. This is equivalent that a frequency range that can be kept by the low-pass filter is the zero frequency to the preset frequency.

To ensure that a measured power of each of the different frequency components is corresponding to a power of a corresponding frequency component of an equal bandwidth in the first optical signal, the preset frequency of the low-pass filtering manner may be set to half a bandwidth used for determining the powers of the different frequency components of the to-be-measured channel.

Reference may be made to FIG. 4B. This is because a frequency range that is obtained after filtering in the low-pass filtering manner is actually from the zero frequency to half a bandwidth of one frequency component. A power of this portion of frequency includes a power of an A-F portion of the electrical signal that is converted from the portion of the first optical signal with frequencies higher than the frequency of the local oscillation light beam and a noise power of a corresponding frequency range, and a power of a superimposed A-C portion that is mirrored from an A-B portion of the electrical signal that is converted from the portion of the first optical signal with frequencies lower than the frequency of the local oscillation light beam and a power of a superimposed portion that is mirrored from a noise power of a corresponding frequency range. That is, a power represented by D-E plus a noise power equals a sum of the A-C power, the A-B power, and the noise powers, which is an equivalent of a power of an entire frequency component, that is, a signal power B-F and a noise power. A roll-off factor of the frequency component is the same as a roll-off factor of a corresponding frequency component of the first optical signal.

If the frequency range of low-pass filtering is not changed, to obtain the different frequency components, at least two local oscillation light beams need to be generated and frequencies of the local oscillation light beams are different. In this case, frequency ranges of electrical signals obtained by means of coherent coupling and photoelectric detection also differ. The different frequency components may be obtained by filtering the electrical signals. In addition, frequencies of the at least two local oscillation light beams need to respectively equal center frequencies of frequency components in the first optical signal that are corresponding to the different frequency components.

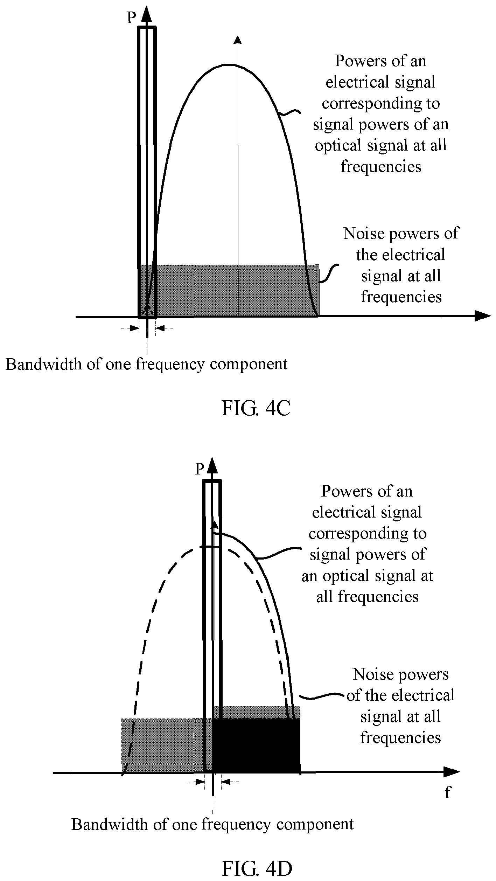

FIG. 4C is a schematic diagram of an edge frequency component obtained in a low-pass filtering manner in S202. FIG. 4D is a schematic diagram of an edge frequency component obtained in a low-pass filtering manner in S202.

Optionally, as shown in FIG. 4C, if one frequency component of the different frequency components is a minimum frequency component of the electrical signal, the frequency of the local oscillation light beam needs to equal a sum of the center frequency of the first optical signal and the bandwidth of the different frequency components. Similarly, as shown in FIG. 4D, if one frequency component of the different frequency components is a center frequency component of the electrical signal, the frequency of the local oscillation light beam needs to equal the center frequency of the first optical signal.

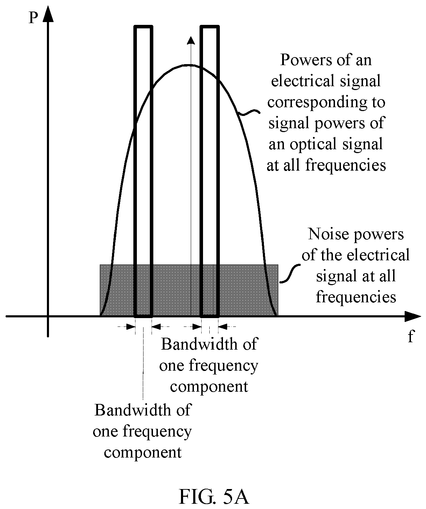

FIG. 5A is a schematic diagram of frequency components obtained in a band-pass filtering manner in S202.

The band-pass filtering manner is generally implemented by using a band-pass filter. A filtering condition for the band-pass filter may be set as follows: A preset frequency range is specified, so that an electrical signal higher or lower than the preset frequency range is removed. This is equivalent that a frequency range that may be kept by the band-pass filter is the preset frequency range.

To ensure that a measured power of each of the different frequency components is corresponding to a power of a corresponding frequency component of an equal bandwidth in the first optical signal, a bandwidth of the preset frequency range of the band-pass filtering manner may be set to a bandwidth used for determining the powers of the different frequency components of the to-be-measured channel.

If the frequency range of band-pass filtering is not adjusted, to obtain the different frequency components, at least two local oscillation light beams need to be generated and frequencies of the local oscillation light beams are different. In this case, frequency ranges of electrical signals obtained by means of coherent coupling and photoelectric detection also differ. The different frequency components may be obtained by filtering the electrical signals. A frequency of one of the local oscillation light beams is corresponding to one target frequency component. Frequencies of the local oscillation light beams respectively equal center frequencies of the different target frequency components minus a center frequency of the preset frequency range of the band-pass filtering manner.

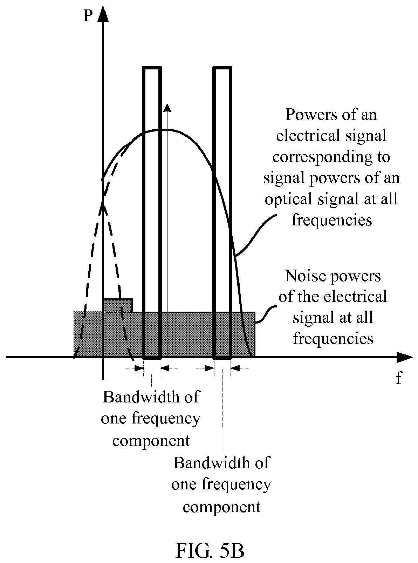

If an electrical signal obtained by using a coherent detection method includes a superimposed power mirrored from a portion of the first optical signal with frequencies lower than the frequency of the local oscillation light beam, reference may be made to FIG. 3B to FIG. 3D. In this case, a power of a frequency component of the electrical signal that includes a superimposed portion and that is obtained in the band-pass filtering manner is different from a roll-off factor of a corresponding frequency component of the first optical signal. Therefore, when the electrical signals are filtered in the band-pass filtering manner, for the frequencies of the local oscillation light beams, it needs to be avoided that a mirrored and superimposed power is included in frequency ranges of the different frequency components. Referring to FIG. 5B, FIG. 5B is another schematic diagram of different frequency components obtained in a band-pass filtering manner in S202. Similarly, it can be learned that when the frequency of the local oscillation light beam is sufficiently high, it can also be avoided that a mirrored and superimposed power is included in frequency ranges of the different frequency components.

Therefore, a frequency meeting the following condition may be selected as the frequency of the local oscillation light beam:

a center frequency of the first optical signal is set to *a*, a bandwidth of the first optical signal is set to b, and a bandwidth of the different frequency components is set to c; if a center frequency of a frequency component corresponding to a target frequency component of the first optical signal is X, the frequency range of the frequency component is

$$[X - \frac{c}{2}, X + \frac{c}{2}];$$ the frequency of the local oscillation light beam is *f*, and a filtering range of band-pass filtering is

$$[d - \frac{c}{2}, d + \frac{c}{2}];$$ *a*, *b*, c, *d*, *f*, and X are all greater than 0, $a > \frac{b}{2}$, and $d > \frac{c}{2}$. Therefore, the frequency of the local oscillation light beam needs to meet the following condition:

$$X - \frac{c}{2} - f > \frac{b}{2} - (a - f) \text{ or } -[(X + \frac{c}{2}) - f] > \frac{b}{2} - [-(a - f)]$$

Arranging the above expressions can obtain that a frequency range selectable for the local oscillation light beam is $f < \frac{1}{2}(X - \frac{c}{2} - \frac{b}{2} + a)$ or $f > \frac{1}{2}(X + \frac{c}{2} - \frac{b}{2} + a)$.

Optionally, if the frequency range of band-pass filtering is adjustable, to obtain the different frequency components, at least one local oscillation light beam may be generated. At least one electrical signal may be obtained by means of coherent coupling and photoelectric detection. The at least one electrical signal is filtered for multiple times so as to obtain the different frequency components. Center frequencies of preset frequency ranges of the band-pass filtering manner may respectively equal center frequencies of the different target frequency components minus a frequency of the at least one local oscillation light beam.

Similar to the foregoing constraint on the frequency of the local oscillation light beam when at least two local oscillation light beams are generated and the band-pass filtering manner is used, a frequency meeting the following condition may be selected as the frequency of the at least one local oscillation light beam:

a center frequency of the first optical signal is set to *a*, a bandwidth of the first optical signal is set to b, and a bandwidth of the different frequency components is set to c; a center frequency of a minimum frequency component corresponding to the different frequency components of the first optical signal is $X_1$, which means a minimum frequency component is

$$[X_1 - \frac{c}{2}, X_1 + \frac{c}{2}];$$ a center frequency of a corresponding maximum frequency component is

$$[X_2 - \frac{c}{2}, X_2 + \frac{c}{2}]\,;\quad \text{the frequency of the local oscillation light beam is } f;\text{ a filtering range of band-pass filtering is}$$

$$[d - \frac{c}{2}, d + \frac{c}{2}]\,;\; a, b, c, d, f, X_1 \text{ and } X_2 \text{ are all greater than 0, } a > \frac{b}{2}, \text{ and } d > \frac{c}{2}.\text{ Therefore, the frequency of}$$

the local oscillation light beam needs to meet the following condition:

$$X_1 - \frac{c}{2} - f > \frac{b}{2} - (a - f) \;\; \text{or} \;\; -[(X_2 + \frac{c}{2}) - f] > \frac{b}{2} - [-(a - f)]$$

Arranging the above expressions can obtain that a frequency range selectable for the at least one local oscillation light beam is $f < \frac{1}{2}(X_1 - \frac{c}{2} - \frac{b}{2} + a)$ or $f > \frac{1}{2}(X_2 + \frac{c}{2} - \frac{b}{2} + a)$.

This method may be used when the band-pass filter does not support adjustment.

In both the foregoing low-pass filtering manner and the band-pass filtering manner, the different frequency components whose roll-off factors are the same as the roll-off factors of the corresponding frequency components of the first optical signal may be obtained.

In this embodiment of the present invention, at least two local oscillation light beams are generated for coherent coupling and photoelectric detection and a low-pass filtering manner or a band-pass filtering manner is used. In this way, different frequency components can be obtained without a need to adjust a filtering frequency setting of an electrical filter so as to determine an optical signal-to-noise ratio. This can reduce errors resulting from operating the electrical filter. This embodiment of the present invention provides a method for determining an optical signal-to-noise ratio that is cost-effective and accurate.

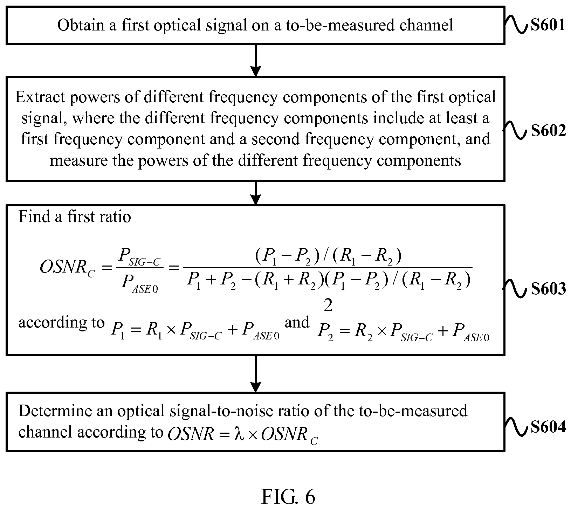

FIG. 6 is a schematic flowchart of Embodiment 2 of the method for determining an optical signal-to-noise ratio provided by the embodiments of the present invention. When there is no optical filter or other optical transmission devices on an optical fiber communication link of a to-be-measured channel, powers of frequency components of a to-be-measured signal is free from impact of an optical filter or another optical transmission device. The optical signal-to-noise ratio of the to-be-measured channel may be determined in the following manner.

Based on the method shown in FIG. 2 to FIG. 5B, S104 may be implemented by using step S603. As shown in FIG. 6, this embodiment of the present invention includes the following steps.

S601. Obtain a first optical signal on a to-be-measured channel.

S602. Extract powers of different frequency components of the first optical signal, where the different frequency components include at least a first frequency component and a second frequency component, and measure the powers of the different frequency components.

S601 and S602 may be implemented by using steps S201 to S203 of the method shown in FIG. 2 to FIG. 5B.

Correspondingly, roll-off factors of the different frequencies obtained in advance include at least roll-off factors of an optical signal respectively at the first frequency and the second frequency.

Preferably, the first frequency component may be a frequency component of the electrical signal converted from the center frequency component of the first optical signal. Correspondingly, a roll-off factor of the first frequency component is 1.

Obviously, this method for determining an optical signal-to-noise ratio where the center frequency is selected as one frequency can reduce workload of computation.

Further, the second frequency component may be a frequency component of the electrical signal converted from an edge frequency component of the first optical signal. An OSNR determined by using this method for determining an optical signal-to-noise ratio according to corresponding frequency components of the electrical signal converted from the center frequency component and the edge frequency component of the first optical signal is more accurate.

S603. Find a first ratio $OSNR_C = \dfrac{P_{SIG-C}}{P_{ASE0}} = \dfrac{(P_1 - P_2)/(R_1 - R_2)}{\dfrac{P_1 + P_2 - (R_1 + R_2)(P_1 - P_2)/(R_1 - R_2)}{2}}$ according to $P_1$

$= R_1 \times P_{SIG-C} + P_{ASE0}$ and $P_2 = R_2 \times P_{SIG-C} + P_{ASE0}$, where

$OSNR_C$ is the first ratio; $P_1$ and $P_2$ are powers of a first frequency component and a second frequency component of the electrical signal; $R_1$ and $R_2$ are roll-off factors of the first frequency component and the second frequency component of the first optical signal, respectively; $P_{SIG-C}$ is a signal power of a center frequency component of the electrical signal;

and $P_{ASE0}$ is a noise power of the center frequency component of the electrical signal.

S604. Determine an optical signal-to-noise ratio of the to-be-measured channel according to $OSNR = \lambda \times OSNR_C$, where

$OSNR$ is the optical signal-to-noise ratio of the to-be-measured channel; $OSNR_C$ is a ratio of the signal power of the center frequency component of the electrical signal to the noise power of the center frequency component of the electrical signal, that is, the first ratio; and $\lambda$ is a calibration factor.

For other steps in this embodiment of the present invention, an implementation manner of the method shown in FIG. 2 to FIG. 5B may be used. Technical effects thereof are similar and details are not further described herein.

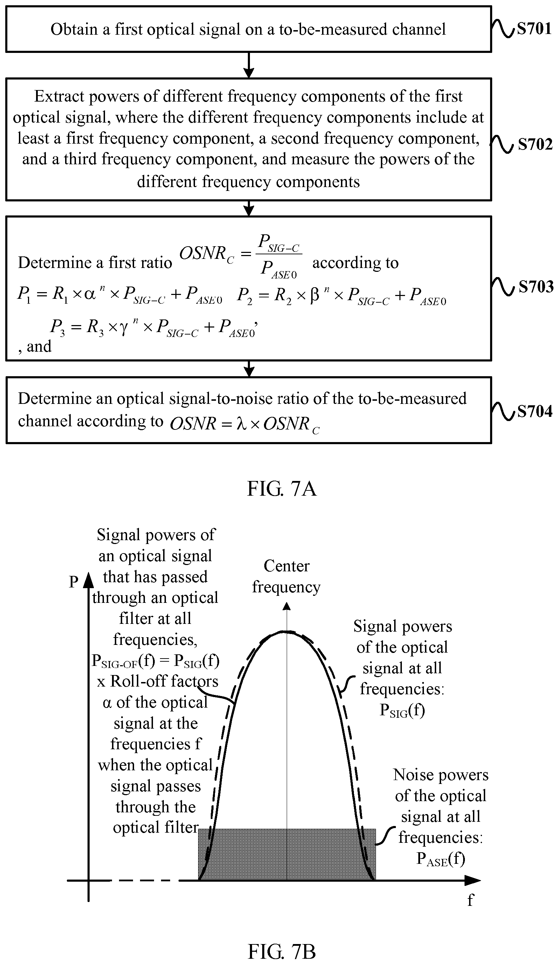

FIG. 7A is a schematic flowchart of Embodiment 3 of the method for determining an optical signal-to-noise ratio provided by the embodiments of the present invention. When there are one or more optical filters or other optical transmission devices on the optical fiber communication link of the to-be-measured channel and waveforms of the optical filter devices are approximately the same, powers of frequency components of a to-be-measured signal are further affected by the optical filters or other optical transmission devices. The optical signal-to-noise ratio of the to-be-measured channel may be determined in the following manner.

Based on the method shown in FIG. 2 to FIG. 6, S104 may be implemented by using step S703. As shown in FIG. 7A, this embodiment of the present invention includes the following steps.

S701. Obtain a first optical signal on a to-be-measured channel.

S702. Extract powers of different frequency components of the first optical signal, where the different frequency components include at least a first frequency component, a second frequency component, and a third frequency component, and measure the powers of the different frequency components.

Correspondingly, roll-off factors obtained in advance include at least roll-off factors of the optical signal respectively at the first frequency, the second frequency, and the third frequency, and roll-off factors of the optical signal respectively at the first frequency component, the second frequency component, and the third frequency component when the optical signal passes through the optical filter.

S701 and S702 may be implemented by using steps S201 to S203 of the method shown in FIG. 2 to FIG. 5B.

It should be noted that the roll-off factors of the optical signal respectively at the first frequency component, the second frequency component, and the third frequency component when the optical signal passes through the optical filter may also be measured by using a back-to-back method. For example, a transmit end of an optical transmission link is directly connected to the optical filter device, then the optical filter is directly connected to a measurement device and powers of electrical signals corresponding to the center frequency component and the at least three frequency components of the first optical signal are measured, and ratios of powers of these non-center frequency components to the power of the center frequency component are recorded as the roll-off factors of the different frequencies respectively.

Preferably, the first frequency component may be a frequency component of the electrical signal converted from the center frequency component of the first optical signal. Correspondingly, a roll-off factor of the first frequency component is 1.

Obviously, this method for determining an optical signal-to-noise ratio where the center frequency is selected as one frequency can reduce workload of computation.

Further, the second frequency component may be a frequency component of the electrical signal converted from an edge frequency component of the first optical signal. An OSNR determined by using this method for determining an optical signal-to-noise ratio according to corresponding frequency components of the electrical signal converted from the center frequency component and the edge frequency component of the first optical signal is more accurate.

S703. Find $OSNR_C = \dfrac{P_{SIG-C}}{P_{ASE0}}$ according to $P_1 = R_1 \times \alpha^n \times P_{SIG-C} + P_{ASE0}$, $P_2 = R_2 \times \beta^n \times P_{SIG-C} + P_{ASE0}$, and $P_3 = R_3 \times \gamma^n \times P_{SIG-C} + P_{ASE0}$, where

$OSNR_C$ is the first ratio; $P_1$, $P_2$, and $P_3$ are powers of a first frequency component, a second frequency component, and a third frequency component of the electrical signal, respectively; $R_1$, $R_2$, and $R_3$ are roll-off factors of the first frequency component, the second frequency component, and the third frequency component of the first optical signal, respectively; $P_{SIG-C}$ is a signal power of a center frequency component of the electrical signal; $P_{ASE0}$ is a noise power of the center frequency component of the electrical signal; n is a quantity of optical filters; and $\alpha$, $\beta$, and $\gamma$ are, respectively, roll-off factors of the first frequency component, the second frequency component, and the third frequency component of the optical signal when the optical signal passes through the optical filter.

S704. Determine an optical signal-to-noise ratio of the to-be-measured channel according to $OSNR = \lambda \times OSNR_C$, where

$OSNR$ is the optical signal-to-noise ratio of the to-be-measured channel; $OSNR_C$ is a ratio of the signal power of the center frequency component of the electrical signal to the noise power of the center frequency component of the electrical signal, that is, the first ratio; and $\lambda$ is a calibration factor.

It should be noted that when the optical transmission link presents a non-point-to-point network structure, there is an optical filter device, for example, a wavelength selective switching (wavelength-selective switch, WSS for short), on the link. In this case, an original signal optical spectrum, a frequency spectrum of an electrical signal after conversion, and the powers of frequency components after filtering may change.

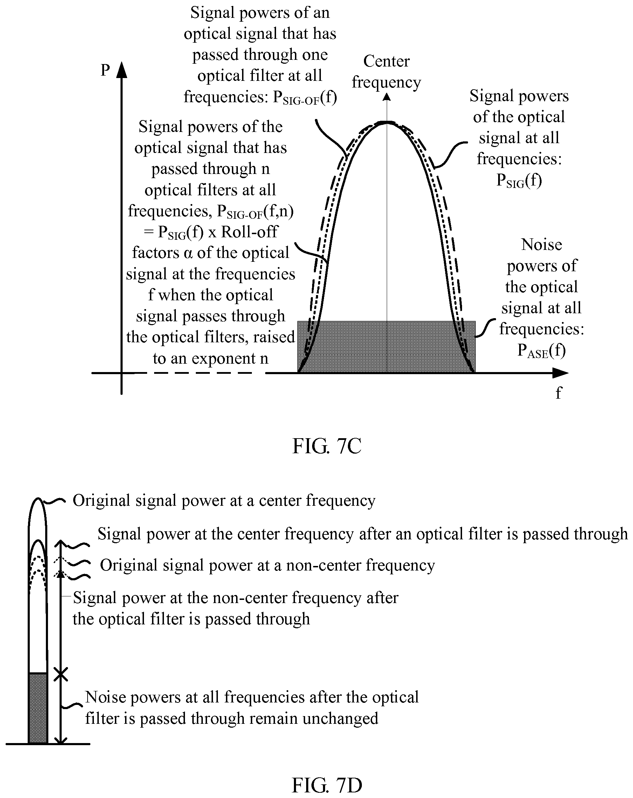

Referring to FIG. 7B, FIG. 7B is a schematic diagram of a change of an original signal optical spectrum when an optical transmission link includes an optical filter. As shown in FIG. 7B, when there is one optical filter on the link, powers at non signal center frequencies on both sides of a center frequency of the original optical spectrum drop more rapidly. If the optical transmission link includes an optical filter, the powers at the frequencies of the first optical signal obtained in S201 are actually powers of the first optical signal at the frequency components multiplied by roll-off factors of the optical signal at the frequency components when the optical signal passes through the optical filter. Therefore, the powers of the different frequency components of the electrical signal measured in S202 are actually the powers of the first optical signal at the frequency components multiplied by the roll-off factors of the optical signal at the frequency components when the optical signal passes through the optical filter. However, for noise, a noise power of the first optical signal that has passed through the optical filter obtained in S201 is basically the same as a power when the optical transmission link does not include an optical filter. Referring to FIG. 7D, FIG. 7D is a schematic diagram of a signal and noise power relationship between a center frequency component and a non-center frequency component when an optical transmission link includes an optical filter.

Similarly, FIG. 7C is a schematic diagram of a change of an original signal optical spectrum when an optical transmission link includes more than one optical filter. When there are two optical filters on the link, a shape of the original optical spectrum is further compressed. If models of the optical filter devices on the optical transmission link are the same, waveforms of signals that have passed through the optical filters are approximately the same. That is, change laws and degrees of powers of frequency components of the first optical signal when the first optical signal passes through the optical filters are approximately the same. Therefore, when the optical transmission link includes n optical filters, powers at frequencies of the first optical signal obtained in S201 are actually the powers of the first optical signal at the frequency components multiplied by the roll-off factors of the frequency components when the optical signal passes through the optical filters raised to an exponent n. If a quantity of the optical filters included on the optical transmission link cannot be determined, the first ratio of the to-be-measured channel needs to be determined according to powers of at least three different frequency components.

For other steps in this embodiment of the present invention, an implementation manner of the method shown in FIG. 2 to FIG. 5B may be used.

In this embodiment of the present invention, considering an optical filter device that may be included on an optical fiber communication link, to determine an optical signal-to-noise ratio, powers of different frequency components determined to be measured include at least powers of a first frequency component, a second frequency component, and a third frequency component. The optical signal-to-noise ratio of a to-be-measured channel is determined according to roll-off factors of the first frequency component, the second frequency component, and the third frequency component, and roll-off factors of an optical signal respectively at the first frequency component, the second frequency component, and the third frequency component when the optical signal passes through the optical filter. In this way, when the optical signal-to-noise ratio of the to-be-measured channel is to be determined, impact on a power when the optical signal passes through the optical filter device is also considered, so that a signal power and a noise power on the to-be-measured channel that are calculated according to the powers of the different frequency components that have been measured are more accurate. Accuracy of the final optical signal-to-noise ratio of the to-be-measured channel is further improved by using powers at different frequencies of the optical signal that has passed through the optical filter. This embodiment of the present invention provides an accurate method for determining an optical signal-to-noise ratio that can be applied to an optical fiber communications networking scenario.

Optionally, when there are one or more optical filters or other optical transmission devices on the optical fiber communication link of the to-be-measured channel and waveforms of the optical filter devices are approximately the same, powers of frequency components of a to-be-measured signal are further affected by the optical filters or other optical transmission devices. The method for determining an optical signal-to-noise ratio provided in this embodiment of the present invention further includes an optional implementation manner.

Different from the method shown in FIG. 2 to FIG. 7A, in this embodiment of the present invention, a first optical signal may not need to be converted to an electrical signal and an optical signal-to-noise ratio is determined directly according to multiple frequency components of the first optical signal. This embodiment of the present invention includes the following steps:

obtaining a first optical signal on a to-be-measured channel;
extracting powers of at least three frequency components of the first optical signal;
measuring the powers of the at least three frequency components;
determining a first ratio according to the powers and roll-off factors of the at least three frequency components; and

determining an optical signal-to-noise ratio of the to-be-measured channel according to the first ratio and a power calibration factor for a center frequency component of the first optical signal, where the power calibration factor for the center frequency component of the first optical signal is determined according to a bandwidth of the to-be-measured channel, a bandwidth of the different frequency components, and a bandwidth of noise.

The at least three frequency components may include at least a first frequency component, a second frequency component, and a third frequency component. The roll-off factors of the different frequency components may include at least roll-off factors of the first frequency component, the second frequency component, and the third frequency component of the first optical signal, and roll-off factors of the first frequency component, the second frequency component, and the third frequency component of the optical signal when the optical signal passes through an optical filter. The roll-off factors of the frequency components of the first optical signal are ratios of signal powers of non-center frequency components to a signal power of a center frequency component on the channel. The roll-off factors of the frequency components of the optical signal when the optical signal passes through the optical filter may also be measured by using a back-to-back method. For example, a transmit end of an optical transmission link is directly connected to the optical filter device, then the optical filter is directly connected to a measurement device and powers of electrical signals corresponding to the center frequency component and the at least three frequency components of the first optical signal are measured, and ratios of powers of these non-center frequency components to the power of the center frequency component are recorded as the roll-off factors of the different frequencies respectively.

It should be noted that the power calibration factor for the center frequency component of the first optical signal is determined according to the bandwidth of the to-be-measured channel, the bandwidth of the different frequency components, and the bandwidth of noise. The calibration factor may be obtained by first using the back-to-back method, for example, connecting the transmit end of the optical transmission link directly to the optical filter device, then connecting the optical filter directly to a measurement device and measuring a power of the center frequency component of the first optical signal and a power of the first optical signal within the bandwidth of the channel, and then calculating the calibration factor according to a relationship between a noise bandwidth of a frequency component and a 0.1 nm bandwidth.

Further, the determining the first ratio according to the powers and the roll-off factors of the at least three frequency components may specifically include:

finding $OSNR_C = \dfrac{P_{SIG-C}}{P_{ASE0}}$ according to $P_1 = R_1 \times \alpha^n \times P_{SIG-C} + P_{ASE0}$, $P_2 = R_2 \times \beta^n \times P_{SIG-C} + P_{ASE0}$, and $P_3 = R_3 \times \gamma^n \times P_{SIG-C} + P_{ASE0}$, where

$OSNR_C$ is the first ratio; $P_1$, $P_2$, and $P_3$ are powers of a first frequency component, a second frequency component, and a third frequency component of the first optical signal, respectively; $R_1$, $R_2$, and $R_3$ are the roll-off factors of the first frequency component, the second frequency component, and the third frequency component of the first optical signal, respectively; $P_{SIG-C}$ is the signal power of the center frequency component of the electrical signal; $P_{ASE0}$ is a noise power of the center frequency component of the electrical signal; n is a quantity of optical filters; and $\alpha$, $\beta$, and $\gamma$ are, respectively, the roll-off factors of the first frequency component, the second frequency component, and the third frequency component of the optical signal when the optical signal passes through the optical filter.

In this embodiment of the present invention, considering an optical filter device that may be included on an optical fiber communication link, to determine an optical signal-to-noise ratio, powers of different frequency components determined to be measured include at least powers of a first frequency component, a second frequency component, and a third frequency component. The optical signal-to-noise ratio of a to-be-measured channel is determined according to roll-off factors of the first frequency component, the second frequency component, and the third frequency component, and roll-off factors of an optical signal respectively at the first frequency component, the second frequency component, and the third frequency component when the optical signal passes through the optical filter. In this way, when the optical signal-to-noise ratio of the to-be-measured channel is to be determined, impact on a power when the optical signal passes through the optical filter device is also considered, so that a signal power and a noise power on the to-be-measured channel that are calculated according to the powers of the different frequency components that have been measured are more accurate. Accuracy of the final optical signal-to-noise ratio of the to-be-measured channel is further improved by using powers at different frequencies of the optical signal that has passed through the optical filter. This embodiment of the present invention provides an accurate method for determining an optical signal-to-noise ratio that can be applied to an optical fiber communications networking scenario.

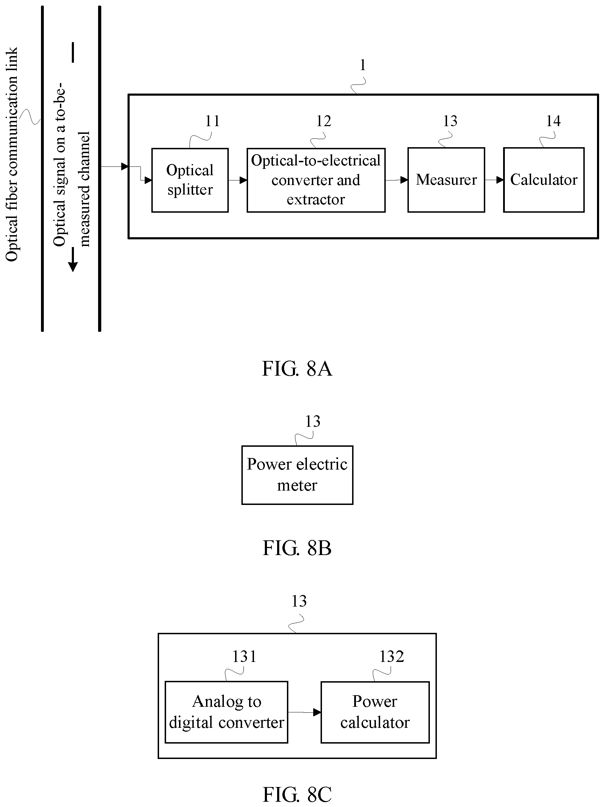

FIG. 8A is a structural diagram of Embodiment 1 of an apparatus for determining an optical signal-to-noise ratio provided by the embodiments of the present invention. As shown in FIG. 8A, the apparatus 1 in this embodiment of the present invention may include an optical splitter 11, an optical-to-electrical converter and extractor 12, a measurer 13, and a calculator 14.

The optical splitter 11 is configured to obtain a first optical signal on a to-be-measured channel.

The optical-to-electrical converter and extractor 12 is configured to convert the first optical signal to an electrical signal and extract different frequency components of the electrical signal. Roll-off factors of the different frequency components of the electrical signal are the same as roll-off factors of corresponding frequency components of the first optical signal, and the roll-off factor is a ratio of a signal power of a non-center frequency component to a signal power of a center frequency component on the channel.

The measurer 13 is configured to measure powers of the different frequency components. The calculator 14 is configured to determine an optical signal-to-noise ratio of the to-be-measured channel according to the powers of the different frequency components.

Optionally, the measurer 13 may measure the powers of the different frequency components by using an electric power meter or another electrical signal power measurement device. For example, an analog to digital converter (Analog to Digital Converter, ADC for short) is used to convert an analog quantity to a digital quantity and then an average power value corresponding to the digital quantity is calculated by means of sampling.

Referring to FIG. 8B to FIG. 8C, FIG. 8B is an optional schematic structural diagram of a measurer. As shown in FIG. 8B, the measurer is a power electric meter 13. FIG. 8C is another optional schematic structural diagram of a measurer. As shown in FIG. 8C, the measurer 13 includes an analog to digital converter 131 and a power calculator 132. This is not limited in the present invention.

The apparatus in this embodiment may be used to implement technical solutions of the method embodiments shown in FIG. 2 to FIG. 7. Implementation principles and technical effects thereof are similar. Details are not further described herein.

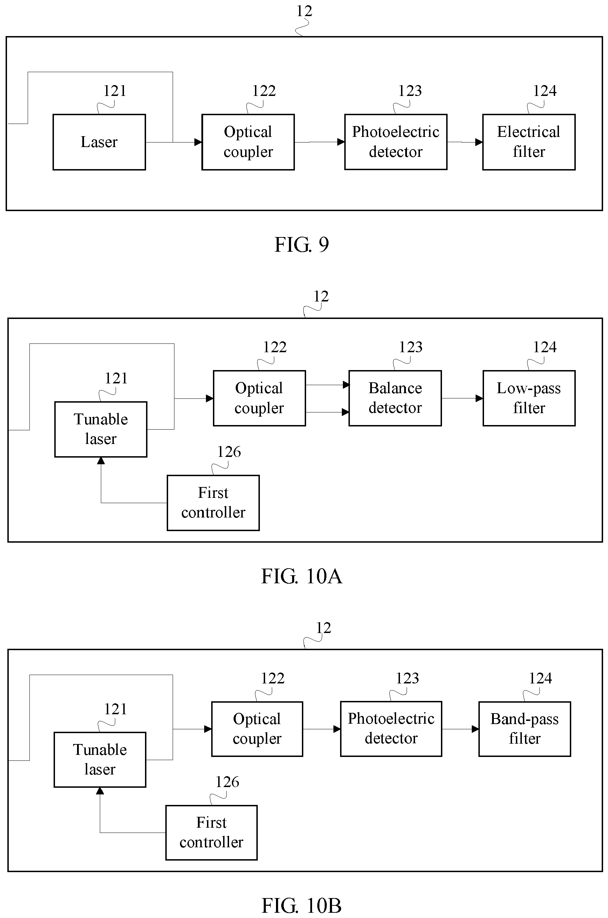

FIG. 9 is a structural diagram of Embodiment 2 of the apparatus for determining an optical signal-to-noise ratio provided by the embodiments of the present invention. Based on the apparatus shown in FIG. 8A to FIG. 8C, as shown in FIG. 9, in the apparatus of this embodiment of the present invention, the optical-to-electrical converter and extractor 12 may include:

a laser 121, configured to generate at least one local oscillation light beam used for coherent detection;
an optical coupler 122, configured to perform coherent coupling on the first optical signal and each local oscillation light beam to obtain second optical signals that are in a one-to-one correspondence with the local oscillation light beams;
a photoelectric detector 123, configured to perform photoelectric detection on the second optical signals to obtain the electrical signals that are in a one-to-one correspondence with the second optical signals; and
an electrical filter 124, configured to filter the electrical signals to obtain the different frequency components of the electrical signal.

Optionally, the photoelectric detector 123 may use a photoelectric detector with one photodiode. Inputting either of the second optical signals outputted from two outlets of the optical coupler into the photoelectric detector can obtain one electrical signal corresponding to the local oscillation light beam. Optionally, the photoelectric detector 123 may alternatively be implemented by using a photoelectric detector with two photodiodes, that is, a balance detector. Inputting the two second optical signals outputted from the two outlets of the optical coupler into the balance detector can obtain one electrical signal corresponding to the local oscillation light beam. A power of an alternating current electrical signal that is obtained by means of photoelectric detection by using a balance detector is twice as high as a power of an alternating current electrical signal that is obtained by using a photoelectric detector with a single photodiode. Therefore, using a balance detector can improve accuracy of a determined optical signal-to-noise ratio.

The apparatus in this embodiment may be used to implement technical solutions of the method embodiments shown in FIG. 2 to FIG. 7. Implementation principles and technical effects thereof are similar. Details are not further described herein.

FIG. 10A is a structural diagram of Embodiment 3 of the apparatus for determining an optical signal-to-noise ratio provided by the embodiments of the present invention. Based on the apparatus shown in FIG. 9, as shown in FIG. 10A, in the apparatus of this embodiment of the present invention, the optical-to-electrical converter and extractor 12 may include a first controller 126, configured to send an instruction to the laser. The instruction is used to instruct that the laser generates at least two local oscillation light beams and that frequencies of the local oscillation light beams are different, so that frequency ranges of the electrical signals obtained by the photoelectric detector are different.

The laser is a tunable laser 121 configured to generate local oscillation light beams of different frequencies according to the instruction of the first controller 126.

The electrical filter is a low-pass filter 124 configured to filter the electrical signals in a low-pass filtering manner to obtain the different frequency components. One frequency component is corresponding to one electrical signal.

The apparatus in this embodiment may be used to implement technical solutions of the method embodiments shown in FIG. 2 to FIG. 7. Implementation principles and technical effects thereof are similar. Details are not further described herein.

FIG. 10B is a structural diagram of Embodiment 4 of the apparatus for determining an optical signal-to-noise ratio provided by the embodiments of the present invention. Based on the apparatus shown in FIG. 9, as shown in FIG. 10B, in the apparatus of this embodiment of the present invention, the optical-to-electrical converter and extractor 12 may include:

a first controller 126, configured to send an instruction to the laser. The instruction is used to instruct that the laser generates at least two local oscillation light beams and that frequencies of the local oscillation light beams are different, so that frequency ranges of the electrical signals obtained by the photoelectric detector 123 are different. Among the at least two local oscillation light beams, a frequency of one of the local oscillation light beams is corresponding to one target frequency component and the target frequency components are different.

The laser is a tunable laser 121 configured to generate local oscillation light beams of different frequencies according to the instruction of the first controller.

The electrical filter is a band-pass filter 124 configured to filter the electrical signals in a band-pass filtering manner to obtain the target frequency components. One frequency component is corresponding to one electrical signal.

Optionally, the photoelectric detector 123 may be a photoelectric detector with two photodiodes, that is, a balance detector.

The apparatus in this embodiment may be used to implement technical solutions of the method embodiments shown in FIG. 2 to FIG. 7. Implementation principles and technical effects thereof are similar. Details are not further described herein.

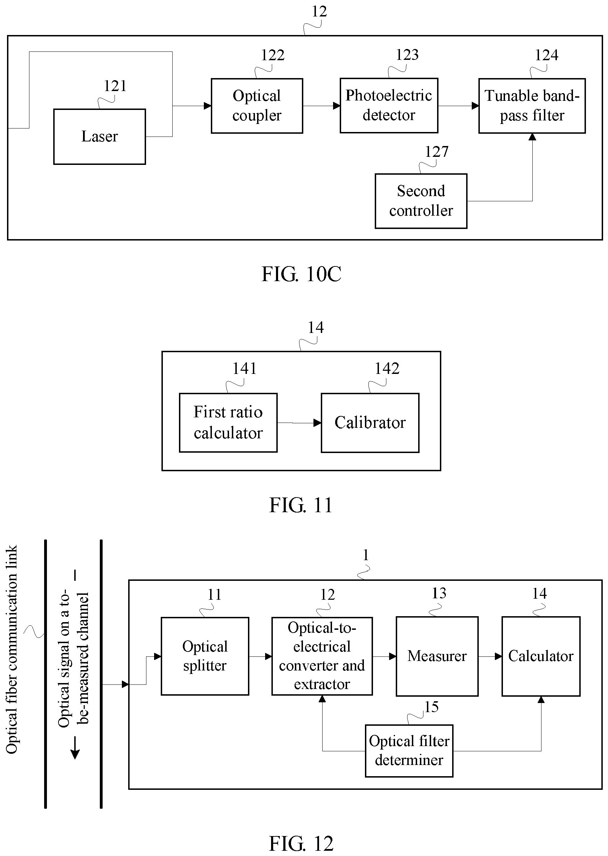

FIG. 10C is a structural diagram of Embodiment 5 of the apparatus for determining an optical signal-to-noise ratio provided by the embodiments of the present invention. Based on the apparatus shown in FIG. 9, as shown in FIG. 10C, in the apparatus of this embodiment of the present invention, if the laser 121 generates one local oscillation light and the target frequency components are different, a frequency value range of the local oscillation light beam is corresponding to a minimum target frequency component or a maximum target frequency component among the target frequency components. The optical-to-electrical converter and extractor 12 may include:

a second controller 127, configured to send a band-pass filtering setting instruction to the electrical filter. The instruction is used to instruct the electrical filter to perform multiple times of filtering on the electrical signals, so that the electrical filter obtains the target frequency components.

The electrical filter is a tunable band-pass filter 124 configured to adjust a band-pass filtering setting according to the instruction of the second controller 127 and perform multiple times of filtering on the electrical signals to obtain the target frequency components, where filtering ranges used for the multiple times of filtering are different.

Optionally, the photoelectric detector 123 may be a photoelectric detector with two photodiodes, that is, a balance detector.

The apparatus in this embodiment may be used to implement technical solutions of the method embodiments shown in FIG. 2 to FIG. 7. Implementation principles and technical effects thereof are similar. Details are not further described herein.

FIG. 11 is a structural diagram of Embodiment 6 of the apparatus for determining an optical signal-to-noise ratio provided by the embodiments of the present invention. Based on the apparatus shown in FIG. 8A to FIG. 10C, as shown in FIG. 11, in the apparatus of this embodiment of the present invention, the calculator 14 may include:

a first ratio calculator 141, configured to determine a first ratio according to the powers and the roll-off factors of the different frequency components; and
a calibrator 142, configured to determine the optical signal-to-noise ratio of the to-be-measured channel according to the first ratio and a power calibration factor for a center frequency component of the first optical signal, where the power calibration factor for the center frequency component of the first optical signal is determined according to a bandwidth of the to-be-measured channel, a bandwidth of the different frequency components, and a bandwidth of noise.

Further, the calibrator 142 may be specifically configured to:

determine the optical signal-to-noise ratio according to $OSNR = \lambda \times OSNR_C$, where
$OSNR$ is the optical signal-to-noise ratio of the to-be-measured channel; $OSNR_C$ is the first ratio; and $\lambda$ is the calibration factor. The power calibration factor for the center frequency component of the first optical signal is determined according to the bandwidth of the to-be-measured channel, the bandwidth of the different frequency components, and the bandwidth of noise. The bandwidth of the to-be-measured channel may be greater than, less than, or equal to a bandwidth of the first optical signal. A reference noise bandwidth is generally a 0.1 nm bandwidth in the definition of the OSNR. The filtering bandwidth is the bandwidth of the different frequency components and may be determined according to an actual signal on the to-be-measured channel on an actual optical fiber communication link.

Optionally, when the different frequency components include at least a first frequency component and a second frequency component, the first ratio calculator 141 may be specifically configured to obtain roll-off factors of a first frequency component and a second frequency component of the optical signal; and

find $OSNR_C = \dfrac{P_{SIG-C}}{P_{ASE0}} = \dfrac{(P_1 - P_2)/(R_1 - R_2)}{\dfrac{P_1 + P_2 - (R_1 + R_2)(P_1 - P_2)/(R_1 - R_2)}{2}}$ according to $P_1 = R_1 \times P_{SIG-C} + P_{ASE0}$

and $P_2 = R_2 \times P_{SIG-C} + P_{ASE0}$, where

$OSNR_C$ is the first ratio; $P_1$ and $P_2$ are powers of a first frequency component and a second frequency component of the electrical signal, respectively; $R_1$ and $R_2$ are the roll-off factors of the first frequency component and the second frequency component of the first optical signal, respectively; $P_{SIG-C}$ is the signal power of the center frequency component of the electrical signal; and $P_{ASE0}$ is a noise power of the center frequency component of the electrical signal.

The apparatus in this embodiment may be used to implement technical solutions of the method embodiments shown in FIG. 2 to FIG. 7. Implementation principles and technical effects thereof are similar. Details are not further described herein.

FIG. 12 is a structural diagram of Embodiment 7 of the apparatus for determining an optical signal-to-noise ratio provided by the embodiments of the present invention. Based on the apparatus shown in FIG. 8A to FIG. 10C, as shown in FIG. 12, in the apparatus of this embodiment of the present invention, the apparatus 1 may further include:

an optical filter determiner 15, configured to: if it is determined that an optical fiber communication link on the to-be-measured channel includes an optical filter, indicate that the different frequency components obtained by the optical-to-electrical converter and extractor include at least a first frequency component, a second frequency component, and a third frequency component; and

the first ratio calculator 141 may be specifically configured to:

obtain roll-off factors of a first frequency component, a second frequency component, and a third frequency component of the optical signal, and roll-off factors of the first frequency component, the second frequency component, and the third frequency component of the optical signal when the optical signal passes through the optical filter; and

find $OSNR_C = \dfrac{P_{SIG-C}}{P_{ASE0}}$ according to $P_1 = R_1 \times \alpha^n \times P_{SIG-C} + P_{ASE0}$, $P_2 = R_2 \times \beta^n \times P_{SIG-C} + P_{ASE0}$, and

$P_3 = R_3 \times \gamma^n \times P_{SIG-C} + P_{ASE0}$, where

$OSNR_C$ is the first ratio; $P_1$, $P_2$, and $P_3$ are powers of a first frequency component, a second frequency component, and a third frequency component of the electrical signal, respectively; $R_1$, $R_2$, and $R_3$ are the roll-off factors of the first frequency component, the second frequency component, and the third frequency component of the first optical signal, respectively; $P_{SIG-C}$ is the signal power of the center frequency component of the electrical signal; $P_{ASE0}$ is a noise power of the center frequency component of the electrical signal; n is a quantity of optical filters; and $\alpha$, $\beta$, and $\gamma$ are, respectively, the roll-off factors of the first frequency component, the second frequency component, and the third frequency component of the optical signal when the optical signal passes through the optical filter.

Finally, it should be noted that the foregoing embodiments are merely intended for describing the technical solutions of the present invention, but not for limiting the present invention. Although the present invention is described in detail with reference to the foregoing embodiments, persons of ordinary skill in the art should understand that they may still make modifications to the technical solutions described in the foregoing embodiments or make equivalent replacements to some or all technical features thereof, without departing from the scope of the technical solutions of the embodiments of the present invention, which is defined by the claims.

**Claims**

1. A method for determining an optical signal-to-noise ratio, comprising:

obtaining a first optical signal on a to-be-measured channel (S201);

converting the first optical signal to an electrical signal and extracting different frequency components of the electrical signal, wherein roll-off factors of the different frequency components of the electrical signal are the same as roll-off factors of corresponding frequency components of the first optical signal, and the roll-off factor is a ratio of a signal power of a non-center frequency component to a signal power of a center frequency component on the channel (S202);

measuring powers of the different frequency components (S203); and

determining an optical signal-to-noise ratio of the to-be-measured channel according to the powers and the roll-off factors of the different frequency components.

2. The method according to claim 1, wherein the converting the first optical signal to an electrical signal and obtaining different frequency components of the electrical signal comprises:

generating at least one local oscillation light beam used for coherent detection;

performing coherent coupling on the first optical signal and each local oscillation light beam to obtain second optical signals that are in a one-to-one correspondence with the local oscillation light beams;

performing photoelectric detection on the second optical signals to obtain the electrical signals that are in a one-to-one correspondence with the second optical signals; and

filtering the electrical signals to obtain the different frequency components.

3. The method according to claim 2, wherein the second optical signals comprise two signals, and the performing photoelectric detection on the second optical signals to obtain the electrical signals that are in a one-to-one correspondence with the second optical signals comprises:

performing balanced detection on the two second optical signals to obtain the electrical signals that are in a one-to-one correspondence with the second optical signals.

4. The method according to claim 3, wherein when there are at least two local oscillation light beams and frequencies of the local oscillation light beams are different, frequency ranges of the electrical signals are different; and the filtering the electrical signals to obtain the different frequency components comprises:

filtering the electrical signals in a low-pass filtering manner to obtain the different frequency components, wherein one of the frequency components is corresponding to one of the electrical signals.

5. The method according to claim 2 or 3, wherein when there are at least two local oscillation light beams and frequencies of the local oscillation light beams are different, frequency ranges of the electrical signals are different, and among the at least two local oscillation light beams, a frequency of one of the local oscillation light beams is corresponding to one target frequency component and the target frequency components are different; and the filtering the electrical signals to obtain the different frequency components, wherein the frequency components are different, comprises:

filtering the electrical signals in a band-pass filtering manner to obtain the target frequency components, wherein one of the frequency components is corresponding to one of the electrical signals.

6. The method according to claim 2 or 3, wherein when there is one local oscillation light beam and the target frequency components are different, a frequency value range of the local oscillation light beam is corresponding to a minimum target frequency component or a maximum target frequency component among the target frequency components; and the filtering the electrical signals to obtain the different frequency components comprises:

performing multiple times of filtering on the electrical signals in a band-pass filtering manner to obtain the target frequency components, wherein filtering ranges used for the multiple times of filtering are different.

7. The method according to any one of claims 1 to 6, wherein the determining an optical signal-to-noise ratio of the to-be-measured channel according to the powers and the roll-off factors of the different frequency components specifically comprises:

determining a first ratio according to the powers and the roll-off factors of the different frequency components; and

determining the optical signal-to-noise ratio of the to-be-measured channel according to the first ratio and a power calibration factor for a center frequency component of the first optical signal, wherein the power calibration factor for the center frequency component of the first optical signal is determined according to a bandwidth of the to-be-measured channel, a bandwidth of the different frequency components, and a bandwidth of noise.

8. The method according to claim 7, wherein the different frequency components comprise at least a first frequency component and a second frequency component and the roll-off factors of the different frequency components comprise at least roll-off factors of a first frequency component and a second frequency component of the optical signal; and

the determining a first ratio according to the powers and the roll-off factors of the different frequency components specifically comprises:

finding $OSNR_C = \dfrac{P_{SIG-C}}{P_{ASE0}} = \dfrac{(P_1 - P_2)/(R_1 - R_2)}{\dfrac{P_1 + P_2 - (R_1 + R_2)(P_1 - P_2)/(R_1 - R_2)}{2}}$ according to $P_1 = R_1 \times$

$P_{SIG-C} + P_{ASE0}$ and $P_2 = R_2 \times P_{SIG-C} + P_{ASE0}$, wherein

$OSNR_C$ is the first ratio; $P_1$ and $P_2$ are powers of a first frequency component and a second frequency component of the electrical signal, respectively; $R_1$ and $R_2$ are the roll-off factors of the first frequency component and the second frequency component of the first optical signal, respectively; $P_{SIG-C}$ is the signal power of the center frequency component of the electrical signal; and $P_{ASE0}$ is a noise power of the center frequency component of the electrical signal.

9. An apparatus for determining an optical signal-to-noise ratio, comprising:

an optical splitter (11), configured to obtain a first optical signal on a to-be-measured channel;
an optical-to-electrical converter and extractor (12), configured to convert the first optical signal to an electrical signal and extract different frequency components of the electrical signal, wherein roll-off factors of the different frequency components of the electrical signal are the same as roll-off factors of corresponding frequency components of the first optical signal, and the roll-off factor is a ratio of a signal power of a non-center frequency component to a signal power of a center frequency component on the channel;
a measurer (13), configured to measure powers of the different frequency components; and
a calculator (14), configured to determine an optical signal-to-noise ratio of the to-be-measured channel according to the powers and the roll-off factors of the different frequency components.

10. The apparatus according to claim 9, wherein the optical-to-electrical converter and extractor (12) comprises:

a laser (121), configured to generate at least one local oscillation light beam used for coherent detection;
an optical coupler (122), configured to perform coherent coupling on the first optical signal and each local oscillation light beam to obtain second optical signals that are in a one-to-one correspondence with the local oscillation light beams;
a photoelectric (123) detector, configured to perform photoelectric detection on the second optical signals to obtain the electrical signals that are in a one-to-one correspondence with the second optical signals; and
an electrical filter (124), configured to filter the electrical signals to obtain the different frequency components of the electrical signal.

11. The apparatus according to claim 10, wherein the second optical signals outputted by the optical coupler are two signals, and

the photoelectric detector (123) is a balance detector that performs balanced detection on the two second optical signal to obtain the electrical signals that are in a one-to-one correspondence with the second optical signals.

12. The apparatus according to claim 11, wherein the optical-to-electrical converter and extractor (12) further comprises a first controller (126), configured to send an instruction to the laser (121), wherein the instruction is used to instruct that the laser (121) generates at least two local oscillation light beams and that frequencies of the local oscillation light beams are different, so that frequency ranges of the electrical signals obtained by the photoelectric detector (123) are different;

the laser (121) is a tunable laser (121) configured to generate local oscillation light beams of different frequencies according to the instruction of the first controller (126); and

the electrical filter (124) is a low-pass filter (124) configured to filter the electrical signals in a low-pass filtering manner to obtain the different frequency components, wherein one frequency component is corresponding to one electrical signal.

13. The apparatus according to claim 10 or 11, wherein the optical-to-electrical converter and extractor (12) further comprises a first controller (126), configured to send an instruction to the laser (121), wherein the instruction is used to instruct that the laser (121) generates at least two local oscillation light beams and that frequencies of the local oscillation light beams are different, so that frequency ranges of the electrical signals obtained by the photoelectric detector (123) are different, wherein among the at least two local oscillation light beams, a frequency of one of the local oscillation light beams is corresponding to one target frequency component and the target frequency components are different;
the laser (121) is a tunable laser (121) configured to generate local oscillation light beams of different frequencies according to the instruction of the first controller (126); and
the electrical filter (124) is a band-pass filter (124) configured to filter the electrical signals in a band-pass filtering manner to obtain the target frequency components, wherein one frequency component is corresponding to one electrical signal.

14. The apparatus according to claim 10 or 11, wherein if the laser (121) generates one local oscillation light beam and the target frequency components are different, a frequency value range of the local oscillation light beam is corresponding to a minimum target frequency component or a maximum target frequency component among the target frequency components;
the optical-to-electrical converter and extractor (12) comprises a second controller (127), configured to send a band-pass filtering setting instruction to the electrical filter (124), wherein the instruction is used to instruct the electrical filter (124) to perform multiple times of filtering on the electrical signals, so that the electrical filter (124) obtains the target frequency components; and
the electrical filter (124) is a tunable band-pass filter (124) configured to adjust a band-pass filtering setting according to the instruction of the second controller (127) and perform multiple times of filtering on the electrical signals to obtain the target frequency components, wherein filtering ranges used for the multiple times of filtering are different.

15. The apparatus according to any one of claims 9 to 14, the calculator (14) comprises:

a first ratio calculator (141), configured to determine a first ratio according to the powers and the roll-off factors of the different frequency components; and
a calibrator (142), configured to determine the optical signal-to-noise ratio of the to-be-measured channel according to the first ratio and a power calibration factor for a center frequency component of the first optical signal, wherein the power calibration factor for the center frequency component of the first optical signal is determined according to a bandwidth of the to-be-measured channel, a bandwidth of the different frequency components, and a bandwidth of noise.

**Patentansprüche**

1. Verfahren zur Bestimmung eines optischen Signal-Rausch-Verhältnisses, umfassend:

Erhalten eines ersten optischen Signals auf einem zu messenden Kanal (S201);
Umwandeln des ersten optischen Signals in ein elektrisches Signal und Extrahieren verschiedener Frequenzkomponenten des elektrischen Signals, wobei die Roll-off-Faktoren der verschiedenen Frequenzkomponenten des elektrischen Signals die gleichen wie die Roll-off-Faktoren der entsprechenden Frequenzkomponenten des ersten optischen Signals sind, und der Roll-off-Faktor ein Verhältnis einer Signalleistung einer Nicht-Mittenfrequenzkomponente zu einer Signalleistung einer Mittenfrequenzkomponente auf dem Kanal (S202) ist;
Messleistungen der verschiedenen Frequenzkomponenten (S203); und
Bestimmen eines optischen Signal-zu-Rausch-Verhältnisses des zu messenden Kanals gemäß den Leistungen und den Roll-off-Faktoren der verschiedenen Frequenzkomponenten.

2. Verfahren nach Anspruch 1, wobei das Umwandeln des ersten optischen Signals in ein elektrisches Signal und Erhalten verschiedener Frequenzkomponenten des elektrischen Signals umfasst:

Erzeugen mindestens eines lokalen Oszillationslichtstrahls, der zur kohärenten Detektion verwendet wird;

Durchführen einer kohärenten Kopplung an dem ersten optischen Signal und jedem lokalen Oszillationslichtstrahl, um zweite optische Signale zu erhalten, die eine 1:1-Entsprechung zu den lokalen Oszillationslichtstrahlen besitzen;

Durchführen einer fotoelektrischen Detektion an den zweiten optischen Signalen, um die elektrischen Signale zu erhalten, die eine 1:1-Entsprechung zu den zweiten optischen Signalen besitzen; und

Filtern der elektrischen Signale, um die verschiedenen Frequenzkomponenten zu erhalten.

3. Verfahren nach Anspruch 2, wobei die zweiten optischen Signale zwei Signale umfassen, und das Durchführen einer fotoelektrischen Detektion an den zweiten optischen Signalen, um die elektrischen Signale zu erhalten, die eine 1:1-Entsprechung zu den zweiten optischen Signalen besitzen, umfasst:

Durchführen einer ausbalancierten Detektion an den zweiten optischen Signalen, um die elektrischen Signale zu erhalten, die eine 1:1-Entsprechung zu den zweiten optischen Signalen besitzen.

4. Verfahren nach Anspruch 3, wobei, wenn mindestens zwei lokale Oszillationslichtstrahlen vorhanden sind und die Frequenzen der lokalen Oszillationslichtstrahlen unterschiedlich sind, die Frequenzbereiche der elektrischen Signale unterschiedlich sind; und das Filtern der elektrischen Signale, um die verschiedenen Frequenzkomponenten zu erhalten, umfasst:

Filtern der elektrischen Signale mittels Tiefpassfilterung, um die verschiedenen Frequenzkomponenten zu erhalten, wobei eine der Frequenzkomponenten einem der elektrischen Signale entspricht.

5. Verfahren nach Anspruch 2 oder 3, wobei, wenn mindestens zwei lokale Oszillationslichtstrahlen und die Frequenzen der lokalen Oszillationslichtstrahlen unterschiedlich sind, die Frequenzbereiche der elektrischen Signale unterschiedlich sind und unter den mindestens zwei lokalen Oszillationslichtstrahlen eine Frequenz eines der lokalen Oszillationslichtstrahlen einer Zielfrequenzkomponente entspricht und die Zielfrequenzkomponenten unterschiedlich sind; und das Filtern der elektrischen Signale, um die verschiedenen Frequenzkomponenten zu erhalten, wobei die Frequenzkomponenten unterschiedlich sind, umfasst:

Filtern der elektrischen Signale mittels Bandpassfilterung, um die Zielfrequenzkomponenten zu erhalten, wobei eine der Frequenzkomponenten einem der elektrischen Signale entspricht.

6. Verfahren nach Anspruch 2 oder 3, wobei, wenn ein lokaler Oszillationslichtstrahl vorhanden ist und die Zielfrequenzkomponenten unterschiedlich sind, ein Frequenzwertbereich des lokalen Oszillationslichtstrahls einer minimalen Zielfrequenzkomponente oder einer maximalen Zielfrequenzkomponente unter den Zielfrequenzkomponenten entspricht; und das Filtern der elektrischen Signale, um die verschiedenen Frequenzkomponenten zu erhalten, umfasst:

mehrmaliges Durchführen des Filterns der elektrischen Signale mittels Bandpassfilterung, um die Zielfrequenzkomponenten zu erhalten, wobei die für die mehrmaligen Filterungen verwendeten Filterbereiche unterschiedlich sind.

7. Verfahren nach einem der Ansprüche 1 bis 6, wobei das Bestimmen eines optischen Signal-zu-Rausch-Verhältnisses des zu messenden Kanals gemäß den Leistungen und den Roll-off-Faktoren der verschiedenen Frequenzkomponenten insbesondere umfasst:

Bestimmen eines ersten Verhältnisses gemäß den Leistungen und den Roll-off-Faktoren der verschiedenen Frequenzkomponenten; und

Bestimmen des optischen Signal-Rausch-Verhältnisses des zu messenden Kanals gemäß dem ersten Verhältnis und eines Leistungskalibrierungsfaktors für eine Mittenfrequenzkomponente des ersten optischen Signals, wobei der Leistungskalibrierungsfaktor für die Mittelfrequenzkomponente des ersten optischen Signals gemäß einer Bandbreite des zu messenden Kanals, einer Bandbreite der verschiedenen Frequenzkomponenten und einer Bandbreite von Rauschen bestimmt wird.

8. Verfahren nach Anspruch 7, wobei die verschiedenen Frequenzkomponenten mindestens eine erste Frequenzkomponente und eine zweite Frequenzkomponente umfassen und die Roll-off-Faktoren der unterschiedlichen Frequenzkomponenten mindestens die Roll-off-Faktoren einer ersten Frequenzkomponente und einer zweiten Frequenzkomponente des optischen Signals umfassen; und

das Bestimmen eines ersten Verhältnisses gemäß den Leistungen und den Roll-off-Faktoren der verschiedenen Frequenzkomponenten insbesondere umfasst:

$$\text{Finden von } OSNR_C = \frac{P_{SIG-C}}{P_{ASE_O}} = \frac{(P_1-P_2)/(R_1-R_2)}{\frac{P_1+P_2-(R_1+R_2)(P_1-P_2)/(R_1-R_2)}{2}} \text{ gemäß } P_1 = R_1 \times P_{SIG-C} + P_{ASE_O}$$

und $P_2 = R_2 \times P_{SIG-C} + P_{ASE_O}$, wobei

$OSNR_C$ das erste Verhältnis ist; $P_1$ und $P_2$ die Leistungen einer ersten Frequenzkomponente bzw. einer zweiten Frequenzkomponente des elektrischen Signals sind; $R_1$ und $R_2$ die Roll-off-Faktoren der ersten Frequenzkomponente bzw. der zweiten Frequenzkomponente des ersten optischen Signals sind; $P_{SIG-C}$ die Signalleistung der Mittenfrequenzkomponente des elektrischen Signals ist; und $P_{ASE_O}$ eine Rauschleistung der Mittenfrequenzkomponente des elektrischen Signals ist.

9. Vorrichtung zur Bestimmung eines optischen Signal-Rausch-Verhältnisses, umfassend:

einen optischen Splitter (11), der konfiguriert ist, um ein erstes optisches Signal auf einem zu messenden Kanal zu erhalten;

einen optoelektrischen Wandler und Extraktor (12), der konfiguriert ist, um das erste optische Signal in ein elektrisches Signal umzuwandeln und verschiedene Frequenzkomponenten des elektrischen Signals zu extrahieren, wobei die Roll-off-Faktoren der verschiedenen Frequenzkomponenten des elektrischen Signals die gleichen wie die Roll-off-Faktoren der entsprechenden Frequenzkomponenten des ersten optischen Signals sind und der Roll-off-Faktor ein Verhältnis einer Signalleistung einer Nicht-Mittenfrequenzkomponente zu einer Signalleistung einer Mittenfrequenzkomponente auf dem Kanal ist;

eine Messeinrichtung (13), die konfiguriert ist, um die Leistungen der verschiedenen Frequenzkomponenten zu messen; und

einen Rechner (14), der konfiguriert ist, um ein optisches Signal-zu-RauschVerhältnis des zu messenden Kanals gemäß den Leistungen und den Roll-off-Faktoren der verschiedenen Frequenzkomponenten zu bestimmen.

10. Vorrichtung nach Anspruch 9, wobei der optoelektrische Wandler und Extraktor (12) umfasst:

einen Laser (121), der konfiguriert ist, um mindestens einen lokalen Oszillationslichtstrahl zu erzeugen, der für die kohärente Detektion verwendet wird;

einen optischen Koppler (122), der konfiguriert ist, um eine kohärente Kopplung an dem ersten optischen Signal und jedem lokalen Oszillationslichtstrahl durchzuführen, um zweite optische Signale zu erhalten, die eine 1:1-Entsprechung zu den lokalen Oszillationslichtstrahlen besitzen;

einen fotoelektrischen Detektor (123), der konfiguriert ist, um eine fotoelektrische Detektion an den zweiten optischen Signalen durchzuführen, um die elektrischen Signale zu erhalten, die eine 1:1-Entsprechung zu den zweiten optischen Signalen besitzen; und

einen elektrischen Filter (124), der konfiguriert ist, um die elektrischen Signale zu filtern, um die verschiedenen Frequenzkomponenten des elektrischen Signals zu erhalten.

11. Vorrichtung nach Anspruch 10, wobei die zweiten optischen Signale, die von dem optischen Koppler ausgegeben werden, zwei Signale sind, und

der fotoelektrische Detektor (123) ein Balancedetektor ist, der eine ausbalancierte Detektion an den zwei zweiten optischen Signalen durchführt, um die elektrischen Signale zu erhalten, die eine 1:1-Entsprechung zu den zweiten optischen Signalen besitzen.

12. Vorrichtung nach Anspruch 11, wobei der optoelektrische Wandler und Extraktor (12) ferner eine erste Steuerung (126) umfasst, die konfiguriert ist, um eine Anweisung an den Laser (121) zu senden, wobei die Anweisung verwendet wird, um anzuweisen, dass der Laser (121) mindestens zwei lokale Oszillationslichtstrahlen erzeugt und dass die Frequenzen der lokalen Oszillationslichtstrahlen unterschiedlich sind, sodass die Frequenzbereiche der elektrischen Signale, die von dem fotoelektrischen Detektor (123) erhalten werden, unterschiedlich sind;

der Laser (121) ein abstimmbarer Laser (121) ist, der konfiguriert ist, um lokale Oszillationslichtstrahlen verschiedener Frequenzen gemäß der Anweisung der ersten Steuerung (126) zu erzeugen; und

der elektrische Filter (124) ein Tiefpassfilter (124) ist, der konfiguriert ist, um die elektrischen Signale mittels Tiefpassfilterung zu filtern, um die verschiedenen Frequenzkomponenten zu erhalten, wobei eine der Frequenzkomponenten einem der elektrischen Signale entspricht.

**13.** Vorrichtung nach Anspruch 10 oder 11, wobei der optoelektrische Wandler und Extraktor (12) ferner eine erste Steuerung (126) umfasst, die konfiguriert ist, um eine Anweisung an den Laser (121) zu senden, wobei die Anweisung verwendet wird, um anzuweisen, dass der Laser (121) mindestens zwei lokale Oszillationslichtstrahlen erzeugt und dass die Frequenzen der lokalen Oszillationslichtstrahlen unterschiedlich sind, sodass die Frequenzbereiche der elektrischen Signale, die von dem fotoelektrischen Detektor (123) erhalten werden, unterschiedlich sind, wobei unter den mindestens zwei lokalen Oszillationslichtstrahlen eine Frequenz eines der lokalen Oszillationslichtstrahlen einer Zielfrequenzkomponente entspricht und die Zielfrequenzkomponenten unterschiedlich sind;
der Laser (121) ein abstimmbarer Laser (121) ist, der konfiguriert ist, um lokale Oszillationslichtstrahlen verschiedener Frequenzen gemäß der Anweisung der ersten Steuerung (126) zu erzeugen; und
der elektrische Filter (124) ein Bandpassfilter (124) ist, der konfiguriert ist, um die elektrischen Signale mittels Bandpassfilterung zu filtern, um die Zielfrequenzkomponenten zu erhalten, wobei eine der Frequenzkomponenten einem der elektrischen Signale entspricht.

**14.** Vorrichtung nach Anspruch 10 oder 11, wobei, wenn der Laser (121) einen lokalen Oszillationslichtstrahl erzeugt und die Zielfrequenzkomponenten unterschiedlich sind, ein Frequenzwertbereich des lokalen Oszillationslichtstrahls einer minimalen Zielfrequenzkomponente oder einer maximalen Zielfrequenzkomponente unter den Zielfrequenzkomponenten entspricht;
der optoelektrische Wandler und Extraktor (12) eine zweite Steuerung (127) umfasst, die konfiguriert ist, um eine Einstellungsanweisung für die Bandpassfilterung an den elektrischen Filter (124) zu senden, wobei die Anweisung verwendet wird, um den elektrischen Filter (124) anzuweisen, eine mehrmalige Filterung der elektrischen Signale durchzuführen, sodass das elektrische Filter (124) die Zielfrequenzkomponenten erhält; und
der elektrische Filter (124) ein abstimmbarer Bandpassfilter (124) ist, der konfiguriert ist, um eine Einstellung für die Bandpassfilterung gemäß der Anweisung der zweiten Steuerung (127) anzupassen und die mehrmalige Filterung der elektrischen Signale durchzuführen, um die Zielfrequenzkomponenten zu erhalten, wobei die für die mehrmaligen Filterungen verwendeten Filterbereiche unterschiedlich sind.

**15.** Vorrichtung nach einem der Ansprüche 9 bis 14, wobei der Rechner (14) umfasst:

einen Rechner für das erste Verhältnis (141), der konfiguriert ist, um ein erstes Verhältnis gemäß den Leistungen und den Roll-off-Faktoren der verschiedenen Frequenzkomponenten zu bestimmen; und
einen Kalibrator (142), der konfiguriert ist, um das optische Signal-RauschVerhältnis des zu messenden Kanals gemäß dem ersten Verhältnis und einem Leistungskalibrierungsfaktor für eine Mittenfrequenzkomponente des ersten optischen Signals zu bestimmen, wobei der Leistungskalibrierungsfaktor für die Mittenfrequenzkomponente des ersten optischen Signals gemäß einer Bandbreite des zu messenden Kanals, einer Bandbreite der verschiedenen Frequenzkomponenten und einer Bandbreite von Rauschen bestimmt wird.

**Revendications**

**1.** Procédé pour déterminer un rapport signal sur bruit optique, consistant :

à obtenir un premier signal optique sur un canal à mesurer (S201) ;
à convertir le premier signal optique en un signal électrique et à extraire différentes composantes de fréquence du signal électrique, dans lequel des facteurs d'affaiblissement des différentes composantes de fréquence du signal électrique sont identiques à des facteurs d'affaiblissement de composantes de fréquence correspondantes du premier signal optique, et le facteur d'affaiblissement est un rapport entre une puissance de signal d'une composante de fréquence non centrale et une puissance de signal d'une composante de fréquence centrale sur le canal (S202) ;
à mesurer les puissances des différentes composantes de fréquence (S203) ; et
à déterminer un rapport signal sur bruit optique du canal à mesurer en fonction des puissances et des facteurs d'affaiblissement des différentes composantes de fréquence.

**2.** Procédé selon la revendication 1, dans lequel la conversion du premier signal optique en un signal électrique et l'obtention de différentes composantes de fréquence du signal électrique consistent :

à générer au moins un faisceau de lumière d'oscillation locale utilisé pour une détection cohérente ;

à effectuer un couplage cohérent sur le premier signal optique et sur chaque faisceau de lumière d'oscillation locale pour obtenir des seconds signaux optiques qui sont dans une correspondance biunivoque avec les faisceaux de lumière d'oscillation locale ;

à réaliser une détection photoélectrique sur les seconds signaux optiques pour obtenir les signaux électriques qui sont dans une correspondance biunivoque avec les seconds signaux optiques ; et

à filtrer les signaux électriques pour obtenir les différentes composantes de fréquence.

**3.** Procédé selon la revendication 2, dans lequel les seconds signaux optiques comportent deux signaux, et la réalisation d'une détection photoélectrique sur les seconds signaux optiques pour obtenir les signaux électriques qui sont dans une correspondance biunivoque avec les seconds signaux optiques consiste :

à réaliser une détection équilibrée sur les deux seconds signaux optiques pour obtenir les signaux électriques qui sont dans une correspondance biunivoque avec les seconds signaux optiques.

**4.** Procédé selon la revendication 3, dans lequel, lorsqu'il y a au moins deux faisceaux de lumière d'oscillation locale et que les fréquences des faisceaux de lumière d'oscillation locale sont différentes, des plages de fréquences des signaux électriques sont différentes ; et le filtrage des signaux électriques pour obtenir les différentes composantes de fréquence consiste :

à filtrer les signaux électriques par un filtrage passe-bas pour obtenir les différentes composantes de fréquence, dans lequel l'une des composantes de fréquence correspond à l'un des signaux électriques.

**5.** Procédé selon la revendication 2 ou 3, dans lequel, lorsqu'il y a au moins deux faisceaux de lumière d'oscillation locale et que les fréquences des faisceaux de lumière d'oscillation locale sont différentes, des plages de fréquences des signaux électriques sont différentes et, parmi les deux, ou plus, faisceaux de lumière d'oscillation locale, une fréquences de l'un des faisceaux de lumière d'oscillation locale correspond à une composante de fréquence cible et les composantes de fréquence cibles sont différentes ; et le filtrage des signaux électriques pour obtenir les différentes composantes de fréquence, dans lequel les composantes de fréquence sont différentes, consiste :

à filtrer les signaux électriques par un filtrage passe-bande pour obtenir les composantes de fréquence cibles, dans lequel l'une des composantes de fréquence correspond à l'un des signaux électriques.

**6.** Procédé selon la revendication 2 ou 3, dans lequel, lorsqu'il y a un faisceau de lumière d'oscillation locale et que les composantes de fréquence cibles sont différentes, une fourchette de valeurs de fréquence du faisceau de lumière d'oscillation locale correspond à une composante de fréquence cible minimale ou à une composante de fréquence cible maximale parmi les composantes de fréquence cibles ; et le filtrage des signaux électriques pour obtenir les différentes composantes de fréquence consiste :

à réaliser de multiples fois un filtrage sur les signaux électriques par un filtrage passe-bande pour obtenir les composantes de fréquence cibles, dans lequel les plages de fréquences utilisées pour les multiples filtrages sont différentes.

**7.** Procédé selon l'une quelconque des revendications 1 à 6, dans lequel la détermination d'un rapport signal sur bruit optique du canal à mesurer en fonction des puissances et des facteurs d'affaiblissement des différentes composantes de fréquence consiste spécialement :

à déterminer un premier rapport en fonction des puissances et des facteurs d'affaiblissement des différentes composantes de fréquence ; et

à déterminer le rapport signal sur bruit optique du canal à mesurer en fonction du premier rapport et d'un facteur d'étalonnage de puissance pour une composante de fréquence centrale du premier signal optique, dans lequel le facteur d'étalonnage de puissance pour la composante de fréquence centrale du premier signal optique est déterminé en fonction d'une largeur de banque du canal à mesurer, d'une largeur de bande des différentes composantes de fréquence et d'une largeur de bande d'un bruit.

**8.** Procédé selon la revendication 7, dans lequel les différentes composantes de fréquence comprennent au moins une première composante de fréquence et une seconde composante de fréquence et les facteurs d'affaiblissement des différentes composantes de fréquence comprennent au moins des facteurs d'affaiblissement d'une première composante de fréquence et d'une seconde composante de fréquence du signal optique ; et
la détermination d'un premier rapport en fonction des puissances et des facteurs d'affaiblissement des différentes composantes de fréquence consiste spécialement :

à trouver $OSNR_c = \dfrac{P_{SIG-C}}{P_{ASE0}} = \dfrac{(P_1 - P_2)/(R_1 - R_2)}{\frac{P_1 + P_2 - (R_1 + R_2)(P_1 - P_2)/(R_1 - R_2)}{2}}$ en fonction de $P_1 = R_1 \times P_{SIG-C} + P_{ASE0}$ et

$P_2 = R_2 \times P_{SIG-C} + P_{ASE0}$, dans lequel

$OSNR_C$ est le premier rapport ; $P_1$ et $P_2$ sont les puissances d'une première composante de fréquence et d'une seconde composante de fréquence du signal électrique, respectivement ; $R_1$ et $R_2$ sont les facteurs d'affaiblissement de la première composante de fréquence et de la seconde composante de fréquence du premier signal optique, respectivement ; $P_{SIG-C}$ est la puissance de signal de la composante de fréquence centrale du signal électrique ; et $P_{ASE0}$ est une puissance de bruit de la composante de fréquence centrale du signal électrique.

9. Appareil pour déterminer un rapport signal sur bruit optique, comprenant :

un diviseur optique (11), configuré pour obtenir un premier signal optique sur un canal à mesurer ;
un convertisseur optique-électrique et un extracteur (12), configurés pour convertir le premier signal optique en un signal électrique et pour extraire différentes composantes de fréquence du signal électrique, dans lequel des facteurs d'affaiblissement des différentes composantes de fréquence du signal électrique sont identiques à des facteurs d'affaiblissement de composantes de fréquence correspondantes du premier signal optique, et le facteur d'affaiblissement est un rapport entre une puissance de signal d'une composante de fréquence non centrale et une puissance de signal d'une composante de fréquence centrale sur le canal ;
un dispositif de mesure (13), configuré pour mesurer les puissances des différentes composantes de fréquence ; et
un calculateur (14), configuré pour déterminer un rapport signal sur bruit optique du canal à mesurer en fonction des puissances et des facteurs d'affaiblissement des différentes composantes de fréquence.

10. Appareil selon la revendication 9, dans lequel le convertisseur optique-électrique et l'extracteur (12) comprennent :

un laser (121), configuré pour générer au moins un faisceau de lumière d'oscillation locale utilisé pour une détection cohérente ;
un coupleur optique (122), configuré pour effectuer un couplage cohérent sur le premier signal optique et sur chaque faisceau de lumière d'oscillation locale pour obtenir des seconds signaux optiques qui sont dans une correspondance biunivoque avec les faisceaux de lumière d'oscillation locale ;
un détecteur photoélectrique (123), configuré pour réaliser une détection photoélectrique sur les seconds signaux optiques pour obtenir les signaux électriques qui sont dans une correspondance biunivoque avec les seconds signaux optiques ; et
un filtre électrique (124), configuré pour filtrer les signaux électriques pour obtenir les différentes composantes de fréquence du signal électrique.

11. Appareil selon la revendication 10, dans lequel les seconds signaux optiques transmis par le coupleur optique sont deux signaux, et
le détecteur photoélectrique (123) est un détecteur d'équilibre qui réalise une détection équilibrée sur les deux seconds signaux optiques pour obtenir les signaux électriques qui sont dans une correspondance biunivoque avec les seconds signaux optiques.

12. Appareil selon la revendication 11, dans lequel le convertisseur optique-électrique et l'extracteur (12) comprennent en outre un premier dispositif de commande (126), configuré pour envoyer une instruction au laser (121), dans lequel l'instruction est utilisée pour ordonner que le laser (121) génère au moins deux faisceaux de lumière d'oscillation locale et que des fréquences des faisceaux de lumière d'oscillation locale soient différentes de telle sorte que des plages de fréquences des signaux électriques obtenus par le détecteur photoélectrique (123) soient différentes ;
le laser (121) est un laser accordable (121) configuré pour générer des faisceaux de lumière d'oscillation locale de différentes fréquences en fonction de l'instruction du premier dispositif de commande (126) ; et
le filtre électrique (124) est un filtre passe-bas (124) configuré pour filtrer les signaux électriques par un filtrage passe-bas pour obtenir les différentes composantes de fréquence, dans lequel une composante de fréquence correspond à un signal électrique.

**13.** Appareil selon la revendication 10 ou 11, dans lequel le convertisseur optique-électrique et l'extracteur (12) comprennent en outre un premier dispositif de commande (126), configuré pour envoyer une instruction au laser (121), dans lequel l'instruction est utilisée pour ordonner que le laser (121) génère au moins deux faisceaux de lumière d'oscillation locale et que des fréquences des faisceaux de lumière d'oscillation locale soient différentes de telle sorte que des plages de fréquences des signaux électriques obtenus par le détecteur photoélectrique (123) soient différentes, dans lequel, parmi les deux, ou plus, faisceaux de lumière d'oscillation locale, une fréquence de l'un des faisceaux de lumière d'oscillation locale correspond à une composante de fréquence cible et les composants de fréquence cibles sont différentes ;
le laser (121) est un laser accordable (121) configuré pour générer des faisceaux de lumière d'oscillation locale de différentes fréquences en fonction de l'instruction du premier dispositif de commande (126) ; et
le filtre électrique (124) est un filtre passe-bande (124) configuré pour filtrer les signaux électriques par un filtrage passe-bande pour obtenir les composantes de fréquence cibles, dans lequel une composante de fréquence correspond à un signal électrique.

**14.** Appareil selon la revendication 10 ou 11, dans lequel, si le laser (121) génère un faisceau de lumière d'oscillation locale et si les composantes de fréquence cibles sont différentes, une fourchette de valeurs de fréquence du faisceau de lumière d'oscillation locale correspond à une composante de fréquence cible minimale ou à une composante de fréquence cible maximale parmi les composantes de fréquence cibles ;
le convertisseur optique-électrique et l'extracteur (12) comprend un second dispositif de commande (127), configuré pour envoyer une instruction de paramétrage de filtrage passe-bande au filtre électriques (124), dans lequel l'instruction est utilisée pour ordonner au filtre électrique (124) de réaliser de multiples fois un filtrage sur les signaux électriques de telle sorte que le filtre électrique (124) obtienne les composantes de fréquence cibles ; et
le filtre électrique (124) est un filtre passe-bande accordable (124) configuré pour régler un paramètre de filtrage passe-bande en fonction de l'instruction du second dispositif de commande (127) et pour effectuer de multiples fois un filtrage sur les signaux électriques pour obtenir les composantes de fréquence cibles, dans lequel les plages de filtrage utilisées pour les multiples filtrages sont différentes.

**15.** Appareil selon l'une quelconque des revendications 9 à 14, dans lequel le calculateur (14) comprend :

un premier calculateur de rapport (141), configuré pour déterminer un premier rapport en fonction des puissances et des facteurs d'affaiblissement des différentes composantes de fréquence ; et
un calibrateur (142), configuré pour déterminer le rapport signal sur bruit optique du canal à mesurer en fonction du premier rapport et d'un facteur d'étalonnage de puissance pour une composante de fréquence centrale du premier signal optique, dans lequel le facteur d'étalonnage de puissance pour la composante de fréquence centrale du premier signal optique est déterminé en fonction d'une largeur de banque du canal à mesurer, d'une largeur de bande des différentes composantes de fréquence et d'une largeur de bande d'un bruit.

FIG. 1A

FIG. 1B

P

Signal power of a center frequency component: $P_{SIG-C}$

Signal power of a non-center frequency component: $P_{SIG-NC}$

Noise powers of all frequency components are $P_{ASE0}$

Filter bandwidth

Filter bandwidth

f

FIG. 1C

Obtain a first optical signal on a to-be-measured channel    S201

Convert the first optical signal to an electrical signal and extract powers of different frequency components of the electrical signal, where roll-off factors of the different frequency components of the electrical signal are the same as roll-off factors of corresponding frequency components of the first optical signal, and the roll-off factor is a ratio of a signal power of a non-center frequency component to a signal power of a center frequency component on the channel    S202

Measure the powers of the different frequency components    S203

Determine an optical signal-to-noise ratio of the to-be-measured channel according to the powers of the different frequency components    S204

FIG. 2A

Signal power of a center frequency component: $P_{SIG-C}$

Signal power of a non-center frequency component, $P_{SIG-NC}$ = $P_{SIG-C}$ x Roll-up factor of the non-center frequency component, $R_{NC}$

FIG. 2B

P

Signal power of a first frequency component: $P_{SIG1}$

Signal power of a second frequency component: $P_{SIG2}$

Noise powers of all frequency components are $P_{ASE0}$

f

FIG. 2C

FIG. 2D

FIG. 3A

FIG. 3B

P

Powers of an electrical signal corresponding to signal powers of an optical signal at all frequencies

Roll-off factors remain unchanged after optical-to-electrical conversion

Signal powers of the optical signal at all frequencies

Noise powers of the optical signal at all frequencies

Noise powers of the electrical signal at all frequencies

f

FIG. 3C

P

Powers of an electrical signal corresponding to signal powers of an optical signal at all frequencies

Noise powers of the electrical signal at all frequencies

Roll-off factors remain unchanged after optical-to-electrical conversion

Signal powers of the optical signal at all frequencies

Noise powers of the optical signal at all frequencies

f

FIG. 3D

P

Powers of an
electrical signal
corresponding to
signal powers of an
optical signal at all
frequencies

Noise powers
of the electrical
signal at all
frequencies

f

Bandwidth of one frequency component

FIG. 4A

P

E
D
F
A
B
C
O

f

Bandwidth of one frequency component

FIG. 4B

Powers of an
electrical signal
corresponding to
signal powers of an
optical signal at all
frequencies

Noise powers of
the electrical
signal at all
frequencies

Bandwidth of one frequency component

FIG. 4C

Powers of an
electrical signal
corresponding to
signal powers of
an optical signal at
all frequencies

Noise powers
of the electrical
signal at all
frequencies

f

Bandwidth of one frequency component

FIG. 4D

FIG. 5A

FIG. 5B

Obtain a first optical signal on a to-be-measured channel  $\curvearrowright$ S601

Extract powers of different frequency components of the first optical signal, where the different frequency components include at least a first frequency component and a second frequency component, and measure the powers of the different frequency components  $\curvearrowright$ S602

Find a first ratio

$$OSNR_C = \frac{P_{SIG-C}}{P_{ASE0}} = \frac{(P_1 - P_2)/(R_1 - R_2)}{\dfrac{P_1 + P_2 - (R_1 + R_2)(P_1 - P_2)/(R_1 - R_2)}{2}}$$

according to  $P_1 = R_1 \times P_{SIG-C} + P_{ASE0}$  and  $P_2 = R_2 \times P_{SIG-C} + P_{ASE0}$   $\curvearrowright$ S603

Determine an optical signal-to-noise ratio of the to-be-measured channel according to  $OSNR = \lambda \times OSNR_C$   $\curvearrowright$ S604

FIG. 6

| Obtain a first optical signal on a to-be-measured channel | S701 |

$\downarrow$

| Extract powers of different frequency components of the first optical signal, where the different frequency components include at least a first frequency component, a second frequency component, and a third frequency component, and measure the powers of the different frequency components | S702 |

$\downarrow$

Determine a first ratio $OSNR_C = \dfrac{P_{SIG-C}}{P_{ASE0}}$ according to

$$P_1 = R_1 \times \alpha^{\,n} \times P_{SIG-C} + P_{ASE0} \quad P_2 = R_2 \times \beta^{\,n} \times P_{SIG-C} + P_{ASE0}$$

$$P_3 = R_3 \times \gamma^{\,n} \times P_{SIG-C} + P_{ASE0},$$
, and

S703

$\downarrow$

| Determine an optical signal-to-noise ratio of the to-be-measured channel according to $OSNR = \lambda \times OSNR_C$ | S704 |

FIG. 7A

FIG. 7B

FIG. 7C

FIG. 7D

1

11 12 13 14

Optical fiber communication link

Optical signal on a to-be-measured channel

| Optical splitter | Optical-to-electrical converter and extractor | Measurer | Calculator |

FIG. 8A

13

| Power electric meter |

FIG. 8B

13

131 132

| Analog to digital converter | Power calculator |

FIG. 8C

12

| Laser (121) | → | Optical coupler (122) | → | Photoelectric detector (123) | → | Electrical filter (124) |

FIG. 9

12

| Tunable laser (121) | → | Optical coupler (122) | → | Balance detector (123) | → | Low-pass filter (124) |

First controller (126)

FIG. 10A

12

| Tunable laser (121) | → | Optical coupler (122) | → | Photoelectric detector (123) | → | Band-pass filter (124) |

First controller (126)

FIG. 10B

12

Laser 121

Optical coupler 122

Photoelectric detector 123

Tunable band-pass filter 124

Second controller 127

FIG. 10C

14

First ratio calculator 141

Calibrator 142

FIG. 11

Optical fiber communication link

Optical signal on a to-be-measured channel

1

Optical splitter 11

Optical-to-electrical converter and extractor 12

Measurer 13

Calculator 14

Optical filter determiner 15

FIG. 12